# FASCICULE DE BREVET EUROPEEN

(11) **EP 2 149 291 B1**
(45) Date de publication et mention de la délivrance du brevet: **29.06.2011**
(21) Numéro de dépôt: 09358004.1
(22) Date de dépôt: 30.07.2009
(51) Int. Cl.: A01D 46/28

(54) **Machine de récolte de baies, en particulier machine à vendanger, pourvue d'un système de secouage, et commande de secouage mécatronique de ce système**
Beeren-Erntemaschine, insbesondere Weintrauben-Erntemaschine, die mit einem Schüttelsystem ausgestattet ist, und megatronische Schüttelsteuerung dieses Systems
Berry harvesting machine, in particular a grape harvester equipped with a shaking system, and mechatronic shaking control for this system

(30) Priorité: 01.08.2008 FR 0804408
(43) Date de publication de la demande: 03.02.2010
(73) Titulaire: PELLENC (Société Anonyme), 84120 Pertuis (FR)
(72) Inventeur: Pellenc, Roger, 84120 Pertuis (FR); Gialis, Jean-Marc, 84460 Cheval Blanc (FR)
(74) Mandataire: Marek, Pierre

(56) Documents cités:
- EP-A- 1 743 516
- FR-A- 2 768 015
- FR-A- 2 768 016
- FR-A- 2 768 017
- US-A1- 2006 021 319

## Description

La présente invention concerne une machine de récolte de baies, en particulier une machine à vendanger, du genre comportant une tête de récolte comprenant deux ensembles de détachement des baies placés en vis-à-vis et constitués, chacun, d'une pluralité de secoueurs ou bras cueilleurs superposés.

Ces secoueurs espacés verticalement sont constitués par des barreaux flexibles et sont fixés, par l'intermédiaire de leurs extrémités opposées, d'une part, sur un arbre vertical d'animation et d'autre part, sur un arbre vertical fixe, oscillant ou monté fou.

Entre ces deux ensembles de détachement des baies ou ensembles de secouage, est ménagé un espace vertical généralement désigné sous le nom de « pincement ».

L'invention vise plus précisément la commande de secouage mécatronique des ensembles de secouage d'une telle machine.

Elle concerne aussi un procédé de commande de secouage mécatronique.

Aujourd'hui, le monde de la viticulture est en perpétuelle recherche de solutions afin d'améliorer les différents systèmes de récolte des machines à vendanger.

Depuis quelques décennies, de nombreuses solutions ont été proposées aux viticulteurs qui procèdent à une vendange mécanique, ou à ceux qui vendangeaient à la main et qui se sont mécanisés, étant donné le niveau de qualité de récolte obtenu par les machines à vendanger modernes.

Cependant, la qualité de la vendange obtenue par une machine à vendanger reste encore très aléatoire et dépend de plusieurs paramètres, notamment de paramètres humains d'appréciation et de paramètres mécaniques de performance des systèmes qui composent une tête de récolte d'une telle machine.

En ce qui concerne les paramètres humains, d'importants progrès ont été réalisés au niveau de l'ergonomie des commandes de réglage de la partie récolte de la machine à vendanger. Pour la partie réglage de la tête de récolte, on peut considérer trois principaux ensembles distincts : la partie secouage de la vigne, la partie convoyage de la vendange et la partie nettoyage de la vendange. Ces accès ergonomiques aux divers réglages d'une tête de récolte de machine à vendanger, permettent aux viticulteurs d'appréhender beaucoup plus facilement les réglages, afin d'obtenir les meilleurs résultats qualitatifs de la récolte.

En ce qui concerne les paramètres mécaniques de performance, beaucoup de progrès ont aussi été apportés sur les trois parties décrites ci-dessus et plus particulièrement sur les systèmes de secouage de la vigne.

Le système de secouage de la vigne est, de loin, la partie la plus importante d'une tête de récolte de machine à vendanger.

En effet, on comprend très bien que, sur une tête de récolte, une partie des systèmes servent à corriger l'insuffisance de qualité générée par les autres systèmes. Par exemple : le système de nettoyage de la vendange doit être d'autant plus performant que le système de secouage l'est moins étant donné qu'il génère énormément de feuilles et de débris de végétaux de toutes sortes qu'il faut éliminer.

On connaît actuellement plusieurs dispositifs de commande des systèmes de secouage pour machines de récolte, telles que machines à vendanger automotrices ou tractées. Ces dispositifs de commande sont plus ou moins sophistiqués, selon les différents constructeurs et les niveaux de performances recherchés.

Concernant les systèmes de secouage des machines à vendanger, il faut considérer que ceux-ci comprennent deux parties distinctes :
- d'une part, les secoueurs qui transmettent la vibration sur la vigne afin d'en faire tomber le raisin dans les meilleures conditions qualitatives possibles, et,
- d'autre part, ce que l'on appelle la commande de secouage qui permet d'animer, de façon plus ou moins contrôlée et avec plus ou moins de précision, lesdits secoueurs.

Il existe à l'heure actuelle deux types principaux de commandes de secouage.

### I - Les commandes de secouage courant dit « classique »

Il s'agit de commandes de secouage non réglables ou peu réglables. Elles sont généralement constituées d'un système bielle-manivelle et elles ne permettent pas les réglages essentiels qui sont le réglage de l'amplitude des secoueurs et le réglage de pincement entre les ensembles de secoueurs, si ce n'est un réglage manuel ou semi manuel directement sur la commande de secouage. Le réglage de la fréquence de secouage quant à elle, est réglable au poste de conduite sur la plupart des commandes de secouage, car ce réglage est très facile à réaliser et surtout peu coûteux. Il est généralement effectué à l'aide d'un moteur hydraulique qui entraîne le système de manivelle en rotation. La vitesse de rotation de la manivelle donne le nombre de coups par minute en réglage de fréquence du secouage.

Les commandes de secouage dit classique ont le très grand avantage d'être simples et robustes. C'est pour cela qu'elles sont majoritairement utilisées par les divers constructeurs de machines à vendanger. Leurs conceptions sont très simples et ne demandent que très peu d'électronique, voire pas d'électronique du tout. Étant donné qu'elles sont toutes issues d'un système bielle-manivelle à mouvement continu de rotation et volant d'inertie associé, elles consomment peu de puissance, car, une fois lancé, le secouage n'a pour opposition que la végétation, entendu que la rotation est continue et lissée par le volant d'inertie.

Les commandes de secouage dit classique à système bielle-manivelle ont, par contre, le très gros inconvénient d'être des commandes très rigides, c'est-à-dire que quelles que soient la conformation et la dureté des obstacles pénétrant dans le dispositif de secouage, le système bielle-manivelle ne cale jamais au risque d'avaries mécaniques. La raison de ces avaries est que, étant donné que les efforts générés dans les bielles ne peuvent être maîtrisés surtout lorsqu'ils arrivent au niveau du point Moro du système bielle manivelle, il est difficile de dimensionner les pièces mécaniques pour garantir une fiabilité de la commande de secouage quels que soient les obstacles pénétrant dans le dispositif de secouage.

Les commandes de secouage dit classique à système bielle-manivelle ont aussi l'inconvénient d'être difficilement réglables. En effet, on peut distinguer trois réglages principaux nécessaires à une commande de secouage :
1) Le réglage de fréquence de secouage est généralement effectué à l'aide d'un moteur hydraulique.
2) Le réglage de pincement entre les secoueurs ; généralement ce réglage est obtenu par le réglage manuel de la longueur de la biellette du système bielle manivelle de la commande de secouage.
3) Le réglage d'amplitude des secoueurs ; ce réglage est particulièrement difficile à obtenir surtout avec un système bielle manivelle. En effet, on comprend aisément que le seul moyen de faire varier l'amplitude des secoueurs est de faire varier le rayon de la manivelle, ou de faire varier la position de fixation de la biellette par rapport à l'axe de rotation de l'arbre d'animation des secoueurs.

### Il - La commande de secouage électronique pour une récolte sélective

Cette commande est décrite dans le document FR-2 768 016.

Cette commande est, à ce jour, la plus performante en termes de réglages au poste de conduite et en précision obtenue. Elle permet le réglage de tous les paramètres de secouage au poste de conduite et avec précision, que ce soit le réglage de la fréquence de secouage, le réglage de pincement entre les secoueurs ou le réglage d'amplitude de mouvement des secoueurs.

En effet, cette commande de secouage a la particularité que le côté droit et le côté gauche de la tête de récolte ne sont pas couplés mécaniquement, ce qui permet aisément le réglage du pincement entre les secoueurs des deux ensembles de secouage, c'est-à-dire entre les secoueurs de l'ensemble gauche et les secoueurs de l'ensemble droit.

La commande de secouage décrite dans le document FR-2 768 016, n'est pas une commande à système bielle-manivelle, elle est animée par un système de vérin alternatif hydraulique asservi par servovalves.

Ce système de vérin alternatif hydraulique asservi par servovalve est un très gros avantage surtout en termes de réglage, mais aussi en termes de souplesse. En effet, contrairement à un système bielle-manivelle, cette commande de secouage peut caler partiellement sur un obstacle important, par exemple un gros piquet de vigne, qui pénètre dans le secouage, ce qui est en général un avantage. Par contre, si la végétation est très importante, le système peut manquer de puissance et caler en continu ce qui est très problématique et limitatif.

Etant donné que chaque ensemble de secouage droit et gauche est indépendant et asservi avec précision hydrauliquement et électroniquement, toutes les possibilités de réglages sur une commande de ce type sont envisageables.

La commande de secouage décrite dans le document FR-2 768 016 comporte encore un inconvénient assez sérieux constitué par le fait que la puissance absorbée est beaucoup plus importante que celle absorbée par un système classique bielle-manivelle. La sur-consommation de puissance est de l'ordre de 40 % à 50 %, ce qui peut s'avérer être un gros problème surtout sur les modèles de machines de petite puissance et notamment sur les machines à vendanger tractées qui sont en général tirées par des tracteurs de faible puissance. De plus, cette puissance absorbée supplémentaire est transformée en chaleur dans l'huile hydraulique qu'il faut absolument refroidir, ce qui est un inconvénient économique supplémentaire.

La présente invention concerne une machine de récolte de baies, en particulier une machine à vendanger, pourvue d'un système de secouage mécatronique, visant à permettre de remédier aux inconvénients susmentionnés des systèmes de commande de secouage connus à ce jour. Elle s'applique en particulier aux machines du genre comprenant un système de secouage constitué de deux ensembles de détachement des baies montés en vis-à-vis et comportant, chacun, une pluralité de secoueurs superposés constitués par des barreaux flexibles fixés, par l'intermédiaire de leurs extrémités, à deux arbres verticaux dont l'un au moins est un arbre d'actionnement oscillant assujetti à une commande de secouage mécatronique permettant de lui communiquer un mouvement oscillatoire.

La commande de secouage mécatronique selon l'invention est notamment remarquable en ce qu'elle comprend un système à excentrique relié à l'arbre d'actionnement des ensembles de secouage par l'intermédiaire d'une biellette et en ce que l'axe de rotation de ce système à excentrique d'entraînement est monté avec une orientation réglable dans un plan parallèle au plan médian de la machine, de sorte que la modification de cette orientation permet de modifier l'amplitude du mouvement d'oscillation dudit arbre d'actionnement.

Selon un mode d'exécution très avantageux, le système de commande de secouage mécatronique comprend deux excentriques montés cote à cote sur un support basculant ou berceau, ces deux systèmes à excentrique étant actionnés en rotation simultanément et en synchronisme par un actionneur commun, de préférence constitué par un moteur hydraulique commun, supporté par ledit berceau, et par un moyen mécanique de transmission à entraînement positif également supporté par ledit berceau dont le pivotement est assuré par un actionneur et permet d'obtenir simultanément et en synchronisme une orientation identique des axes de rotation des excentriques.

Selon un mode d'exécution préféré, le moyen mécanique de transmission à entraînement positif est constitué par une liaison commune par engrenage comprenant une roue dentée entraînée par le moteur hydraulique ou autre actionneur commun et engrenant avec une roue dentée calée sur l'arbre de rotation de chaque système à excentrique.

Selon un autre mode d'exécution, le système à excentrique, ou chaque système à excentrique, est solidaire d'un volant d'inertie.

Selon un autre mode d'exécution, la biellette est fixée au système à excentrique par l'intermédiaire d'un boîtier à roulement assurant la fonction de pivot et de deux tenons diamétralement opposés et solidaires dudit boîtier à roulement, l'axe de ces tenons étant perpendiculaire à l'axe de rotation de l'excentrique.

Selon un autre mode d'exécution, le berceau supportant les organes de la commande à excentrique double est monté avec une aptitude de basculement autour d'un axe perpendiculaire et concourant aux axes de rotation des ensembles à excentrique gauche et droit.

Selon un autre mode d'exécution, le berceau basculant est muni, à ses extrémités droite et gauche de pivots montés avec une aptitude de rotation dans des paliers fixés latéralement sur le bâti du système de secouage, un actionneur reliant un élément supérieur du bâti et un bras solidaire du berceau, assurant le pivotement de celui-ci.

Selon une autre disposition caractéristique importante de l'invention, les arbres de secouage des ensembles de secouage sont montés avec une aptitude de mouvement oscillatoire autour de leur axe longitudinal et de basculement d'amplitude limitée autour d'un point situé dans leur partie basse.

Selon un mode d'exécution préféré, la partie haute de chaque arbre de secouage oscillant-basculant est montée dans un palier à rotule logé avec une latitude de déplacement dans une glissière rigidement solidaire du bâti du système de secouage de la machine.

Selon un autre mode d'exécution préféré, la partie basse de chaque arbre de secouage oscillant-basculant est montée à travers un palier élastique ou à travers un palier à rotule.

Selon une autre disposition caractéristique très avantageuse, le palier à rotule supérieur mobile de chaque arbre d'actionnement est relié à un vérin de contrôle d'effort.

Selon un mode d'exécution préféré, le vérin de contrôle d'effort est agencé pour remplir trois fonctions :
- une fonction de contrôle d'effort du palier à rotule mobile de fixation haute de chaque arbre de secouage droit ou gauche ;
- une fonction de réglage du pincement entre les ensembles de secouage droit et gauche ;
- une fonction d'ouverture rapide du système de secouage.

La commande de secouage mécatronique selon l'invention permet, avec précision, tous les réglages souhaitables pour obtenir la qualité de travail attendue du dispositif de secouage de la machine. Elle permet aussi une certaine souplesse contrôlée et intelligente et ne consomme pas plus de puissance qu'une simple commande à bielle-manivelle classique, tout en transmettant autant de puissance sur la végétation.

Les buts, caractéristiques et avantages ci-dessus, et d'autres encore ressortiront mieux de la description qui suit et des dessins annexés dans lesquels :
La figure 1 est une vue en perspective simplifiée, avec arrachement partiel, d'un exemple de réalisation de machine à vendanger pourvue d'une commande de secouage mécatronique selon l'invention.
La figure 2 est une vue en perspective simplifiée, à caractère schématique et à échelle agrandie, du dispositif de secouage et de la commande de secouage mécatronique de cette machine.

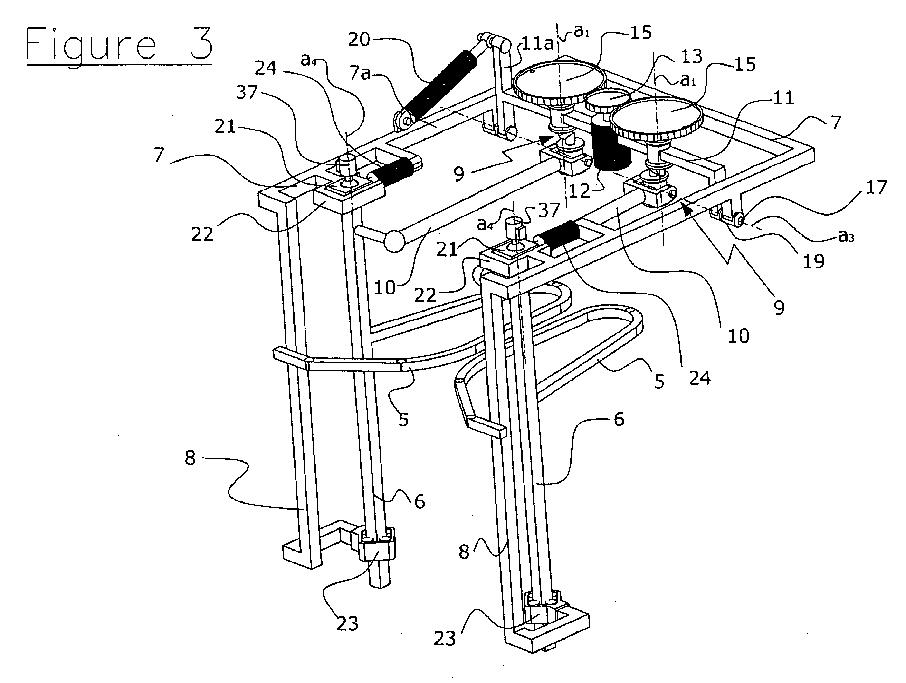

La figure 3 est une vue en perspective et à caractère schématique de ce système de secouage mécatronique.
La figure 4 est une vue en perspective de l'un des systèmes d'entraînement à excentrique de l'arbre d'actionnement d'un ensemble de secoueurs.
La figure 5 est une vue en coupe axiale de ce système à excentrique.
Les figures 6 à 9 sont des vues schématiques illustrant la cinématique de ce système.
La figure 10 est un diagramme illustrant la trajectoire d'un point de référence de deux secoueurs droit et gauche lors d'une variation d'amplitude de secouage.
La figure 11 est une vue en plan représentant les secoueurs dans une position de réglage d'amplitude maximum.
La figure 12 est une vue en plan représentant les secoueurs dans une position de réglage d'amplitude minimum.
La figure 13 est une vue en coupe axiale de l'un des vérins à contrôle d'effort tri-fonctions relié à chaque palier à rotule mobile de la partie haute de l'arbre d'actionnement de chaque ensemble de secouage et représenté en position de réglage minimum du réglage du pincement des secoueurs.
La figure 14 est une vue analogue à la figure 13, le vérin étant représenté en position de réglage intermédiaire du pincement.
La figure 15 est une vue analogue à la figure 14 illustrant la position d'affranchissement du réglage de pincement.
La figure 16A est une vue de face et de détail illustrant le montage oscillant-battant de l'arbre vertical d'animation des secoueurs de chaque ensemble de secouage.
La figure 16B est une vue à plus grande échelle et en coupe suivant la ligne 16-16 de la figure 16A.

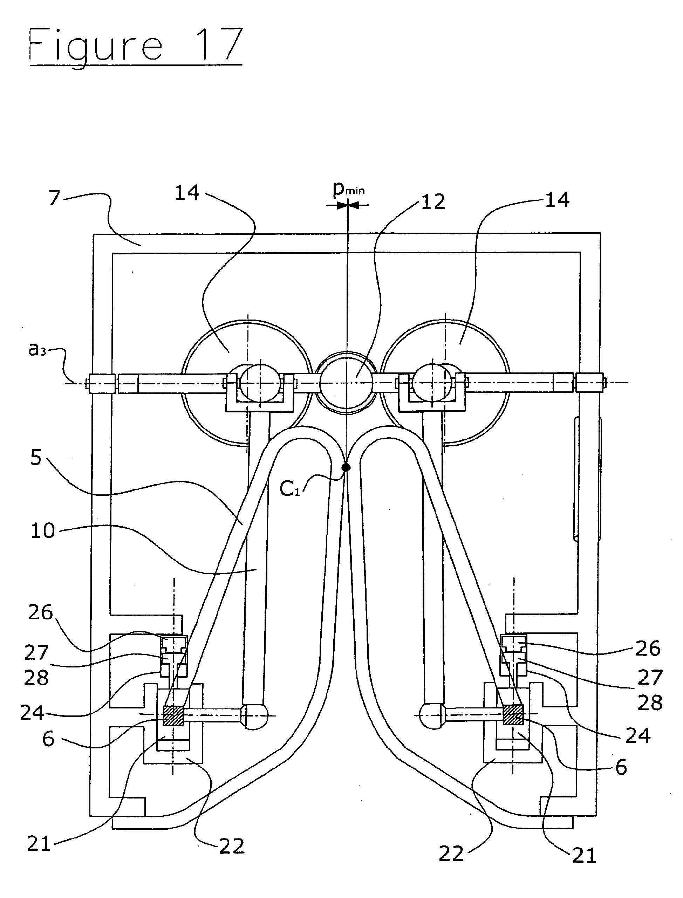

La figure 17 est une vue à caractère schématique représentant les secoueurs droit et gauche en position de pincement minimum.

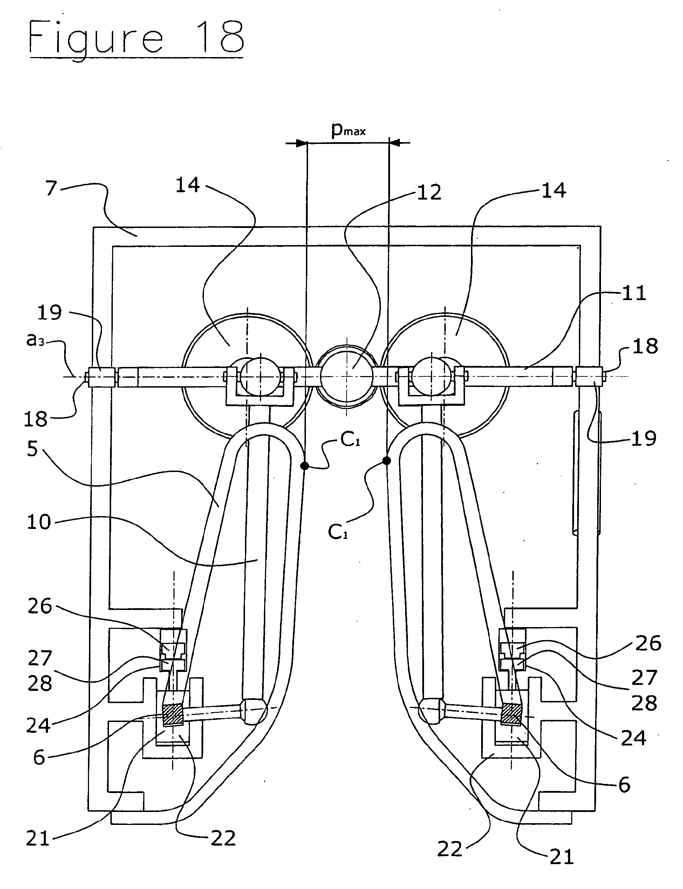

La figure 18 est une vue analogue à la figure 17 et montrant les secoueurs droit et gauche en position de pincement maximum.
La figure 19 est une vue du circuit hydraulique du système de commande du secouage mécatronique.
La figure 20 est une vue en plan illustrant un passage de piquets de grosse section entraînant le déclenchement du vérin de contrôle d'effort et l'affranchissement du pincement.
La figure 21A représente une vigne à forte végétation nécessitant l'utilisation d'ensembles de secouage constitués de nombreux secoueurs.
La figure 21B est un diagramme illustrant la forte pression mesurée dans la chambre du piston de pincement des vérins à contrôle d'effort tri-fonctions.
La figure 22A représente une vigne à faible végétation nécessitant l'utilisation d'ensembles de secouage constitués d'un nombre de secoueurs plus réduit que précédemment.
La figure 22B est un diagramme illustrant la faible pression mesurée dans la chambre du piston de pincement des vérins à contrôle d'effort tri-fonctions.

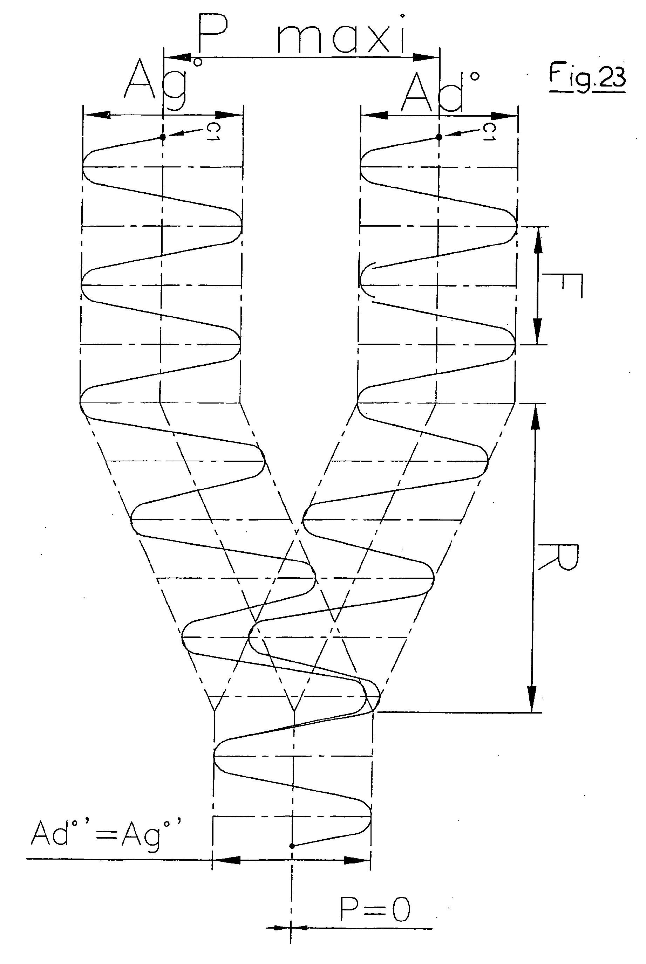

La figure 23 est un diagramme illustrant le réglage du pincement sans altérer l'amplitude.

On se reporte auxdits dessins pour décrire un exemple intéressant, bien que nullement limitatif, de réalisation de la machine de récolte selon l'invention et de mise en oeuvre de ses procédé et système de commande de secouage mécatronique.

Afin de ne pas compliquer inutilement l'exposé de l'invention, on a représenté sur les dessins annexés et on décrit ci-après en détail, seulement le système de commande de secouage mécatronique, étant entendu que les autres parties de la machine faisant application de ce système (bâti, motorisation, convoyeurs de vendanges, bennes de réception, etc.) n'entrent pas dans le cadre de la présente invention et peuvent être exécutés de la façon habituelle bien connue de l'homme de l'art.

D'autre part, si l'on décrit ci-après une application particulièrement intéressante de l'invention, à une machine à vendanger désignant habituellement une machine de récolte du raisin, il est évident qu'elle est aussi applicable à d'autres machines de récolte de baies produites par des arbustes fruitiers plantés en lignes, telles que, par exemple : cassis, olives, framboises, groseilles, cerises du caféier, etc.

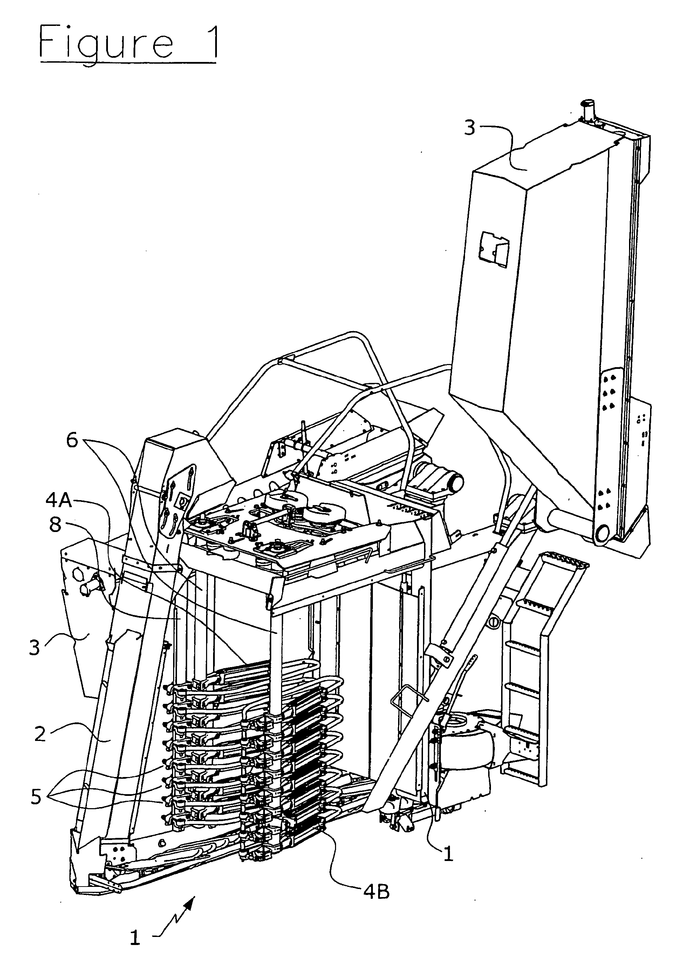

Sur la figure 1, est représentée, de manière simplifiée, une machine à vendanger comprenant, de façon connue en soi, un châssis en forme de portique, une tête de récolte 1 portée par ledit châssis et comportant deux ensembles de secouage se faisant face, deux systèmes de convoyage 2 pour la réception et l'acheminement de la vendange jusqu'à deux bennes de réception 3 installées latéralement et en partie haute du châssis. Ce dernier est équipé de roues (non représentées) et la machine comporte encore une motorisation et des systèmes de régulation (également non représentés) permettant, respectivement, l'entraînement et le contrôle du fonctionnement de ses différents organes actifs. Une telle machine peut être automotrice ou attelable à un véhicule tracteur, par exemple à un tracteur agricole.

La tête de récolte 1 est installée, de préférence de manière amovible, à l'intérieur du portique ou tunnel constitué par le châssis de la machine.

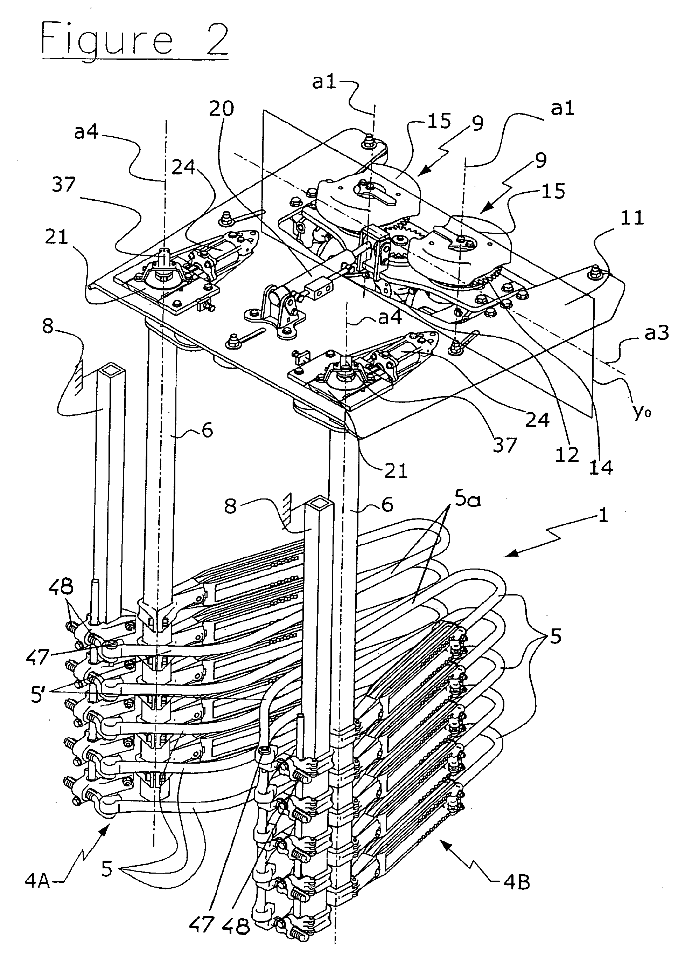

Elle comprend essentiellement (figure 2) un système de secouage constitué de deux ensembles de détachement des baies 4A et 4B montés en vis-à-vis et comportant, chacun, une pluralité de bras cueilleurs ou secoueurs superposés 5. Ces secoueurs espacés verticalement sont, par exemple, constitués par des barreaux flexibles fixés, par l'intermédiaire de leurs extrémités, d'une part, à un premier arbre vertical 6 monté avec une aptitude d'oscillation autour de son axe longitudinal a4, sur le bâti 7 du système de secouage, et, d'autre part, à un deuxième arbre vertical 8 qui est, de préférence, fixe par rapport audit bâti 7, mais qui pourrait être installé avec une aptitude d'oscillation motorisée ou monté fou. Généralement, les secoueurs superposés 5 de chaque ensemble de secouage 4A, 4B sont légèrement décalés verticalement par rapport aux secoueurs de l'autre ensemble de secouage disposé en vis-à-vis.

De manière avantageuse, les secoueurs 5 présentent la forme générale d'une épingle à cheveux constituée de deux branches 5a, 5b légèrement divergentes se raccordant par une portion courbe, l'extrémité de l'une de ces branches ou branche d'animation étant destinée à être reliée à un système d'actionnement (arbre 6), tandis que l'extrémité de l'autre desdites branches constituant la branche active du secoueur étant destinée à être rattachée à un support fixe (arbre 8). Ces secoueurs flexibles sont exécutés dans un matériau semi-rigide, par exemple en polyamide ou autre matière présentant des caractéristiques similaires de flexibilité et de résistance à la flexion (par exemple : polyester, fibre de verre, etc.).

La branche active de ces secoueurs a une longueur supérieure à la longueur de la branche d'animation de ceux-ci, et elle présente une portion extrême courbée en direction de l'axe longitudinal de ladite branche d'animation.

Les principaux composants de la commande de secouage mécatronique selon l'invention sont disposés au-dessus des ensembles de secouage 4A et 4B.

Selon une première disposition caractéristique de l'invention, l'actionnement de chaque arbre 6 d'animation des secoueurs 5 est réalisé au moyen d'un système à excentrique 9 relié audit arbre par l'intermédiaire d'une biellette 10, et l'axe de rotation a1 de ce système à excentrique est monté avec une orientation réglable, de sorte que la modification de cette orientation permet de modifier l'amplitude d'oscillation dudit arbre et, par voie de conséquence, l'amplitude du mouvement de secouage des secoueurs 5 fixés audit arbre d'animation 6.

Selon un mode d'exécution très avantageux, deux systèmes à excentrique 9 sont montés cote à cote sur un support basculant 11 dénommé « berceau » dans la suite du présent exposé. Ces deux systèmes à excentrique 9 étant actionnés en rotation simultanément et en synchronisme autour des axes a1 par un actionneur commun, de préférence par un moteur hydraulique commun 12, supporté par ledit berceau 11, et un moyen mécanique de transmission à entrainement positif, par exemple une liaison commune par engrenage logée entre les deux systèmes à excentrique 9.

Cette liaison par engrenage commune aux deux systèmes à excentrique permet de synchroniser en rotation les deux systèmes à excentrique suivant les axes de rotation a1 et, par effet de conséquence, assure le synchronisme d'oscillation des deux arbres de secouage gauche et droit 6, par l'intermédiaire des biellettes gauche et droite 10.

La liaison commune par engrenage comprend, par exemple, une roue dentée 13 entrainée par le moteur hydraulique 12 et engrenant avec une roue dentée 14 calée sur l'arbre de rotation 9a de chaque système à excentrique 9.

L'actionneur commun 12 pourrait être constitué par un moteur autre qu'un moteur hydraulique, par exemple par un moteur électrique.

Chaque système à excentrique est solidaire d'un volant d'inertie 15, par exemple monté au-dessus de la roue dentée 14 dudit système.

La biellette 10 est fixée au système à excentrique 9 par l'intermédiaire d'un boîtier à roulement 16 assurant la fonction de pivot et de deux tenons 17 diamétralement opposés et solidaires dudit boîtier à roulement. L'axe a2 de ces tenons est perpendiculaire à l'axe de rotation a1 du système à excentrique.

Cette liaison combinée de l'extrémité de la biellette 10 et du système à excentrique 9 au moyen d'un pivot et de deux tenons perpendiculaires assure une liaison identique à celle d'une liaison cardan.

Le montage et le fonctionnement synchronisés des deux systèmes à excentrique 9 disposés cote à cote et à axes de rotation parallèles a1, permettent d'effectuer le réglage précis de l'amplitude de mouvement de l'ensemble des secoueurs 5 fixés sur les arbres de secouage gauche et droit 6 par l'intermédiaire des biellettes gauche et droite 10.

Dans ce but, le berceau 11 supportant les organes de la commande à excentrique double est monté avec une aptitude de basculement autour d'un axe a3 perpendiculaire et concourant aux axes a1 de rotation des ensembles à excentrique gauche et droit 9.

Le berceau basculant 11 est muni, à ses extrémités droite et gauche, de pivots 18 montés avec une aptitude de rotation dans des paliers 19 fixés latéralement sur le bâti 7 du système de secouage.

Le pivotement du berceau est obtenu au moyen d'un actionneur 20, par exemple constitué par un vérin hydraulique, électrique ou pneumatique. Ce vérin 20 relie, par exemple, un élément supérieur 7a du bâti 7 et un bras 11a rigidement solidaire du berceau 11. L'élément supérieur 7a peut être constitué par une plaque supportant également les vérins à contrôle d'effort tri-fonctions décrits ci-après, et dans la partie arrière de laquelle est ménagée une ouverture pour le montage de la platine support constituant le berceau 11.

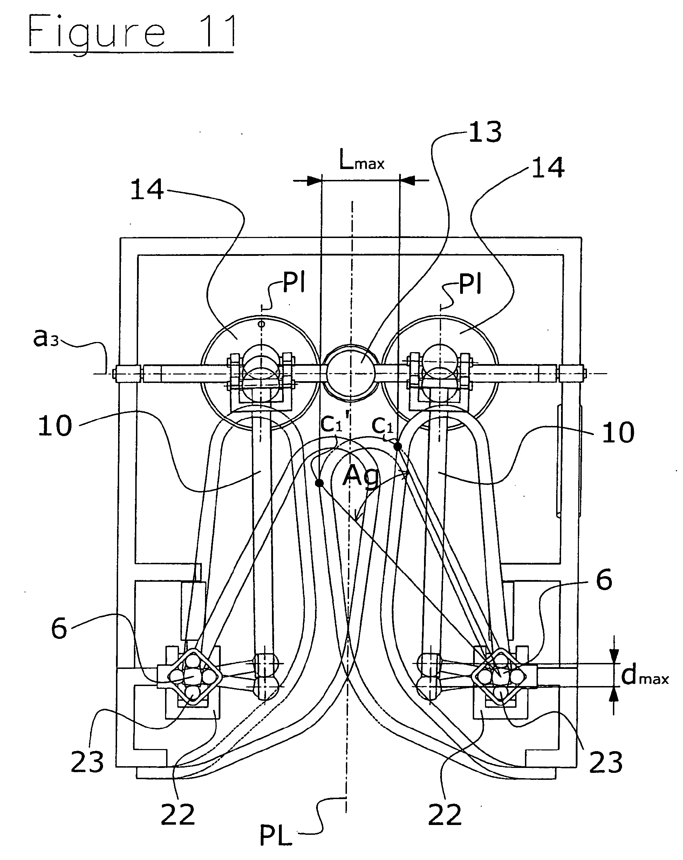

On comprend que le pivotement du berceau 11 permet de modifier l'orientation des axes de rotation a1 des excentriques 9 droit et gauche dans des plans PI parallèles au plan médian PL (figure 11) du système de secouage 4A-4B de la machine, de sorte que cette modification d'orientation permet de modifier, simultanément et en synchronisme, l'amplitude du mouvement d'oscillation des arbres d'actionnement 6 dudit système de secouage et, par voie de conséquence, l'amplitude du mouvement de secouage de l'ensemble des secoueurs 5 fixés aux arbres d'actionnement ou d'animation dudit système de secouage 4A-4B.

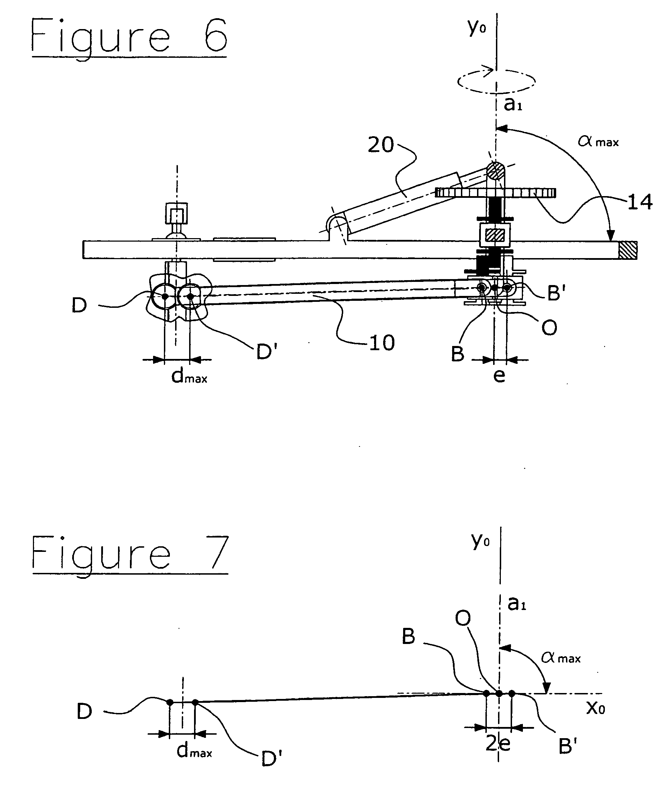

Le principe de fonctionnement du dispositif décrit ci-dessus est simple. Si l'on désire réduire l'amplitude du mouvement des ensembles de secouage 4A, 4B, il suffit de faire pivoter le berceau 11 supportant les systèmes à excentrique 9 autour de l'axe de rotation a3 à l'aide dudit actionneur 20 afin de réduire l'angle α résultant du mouvement de rotation et situé entre les plans Y₀ constitué par les deux axes gauche et droit a1 et le plan horizontal X₀ passant par l'axe horizontal a1 de l'ensemble berceau support 11- système à excentrique 9 (figure 6 à 9).

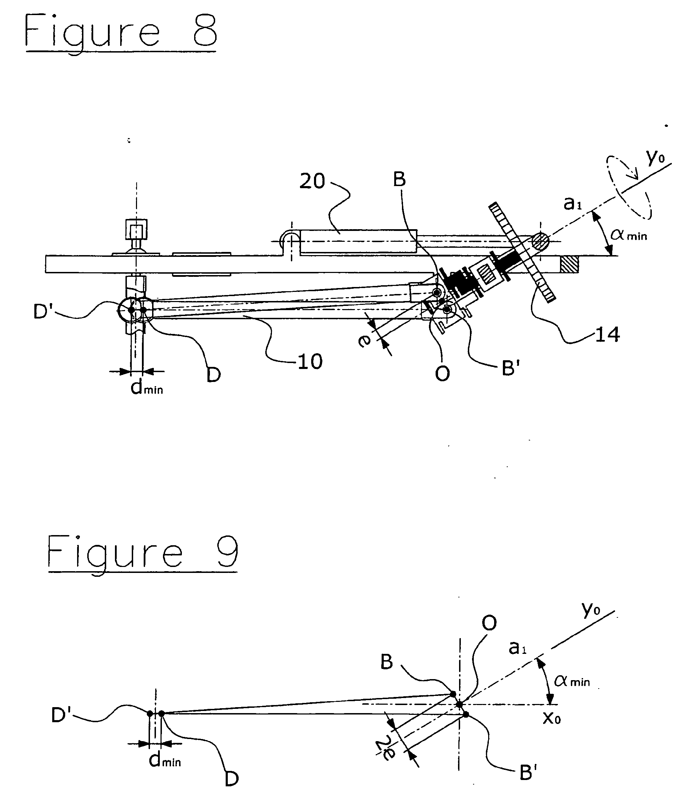

Sur les figures 6 et 7, est représenté schématiquement l'ensemble berceau support 11-système à excentrique 9 en position de réglage de l'amplitude maximum, c'est-à-dire avec un angle α voisin de 90°, tandis que sur les figures 8 et 9, est représenté schématiquement l'ensemble berceau support 11-système à excentrique 9 en position de réglage de l'amplitude « mini », c'est-à-dire avec un angle α minimum.

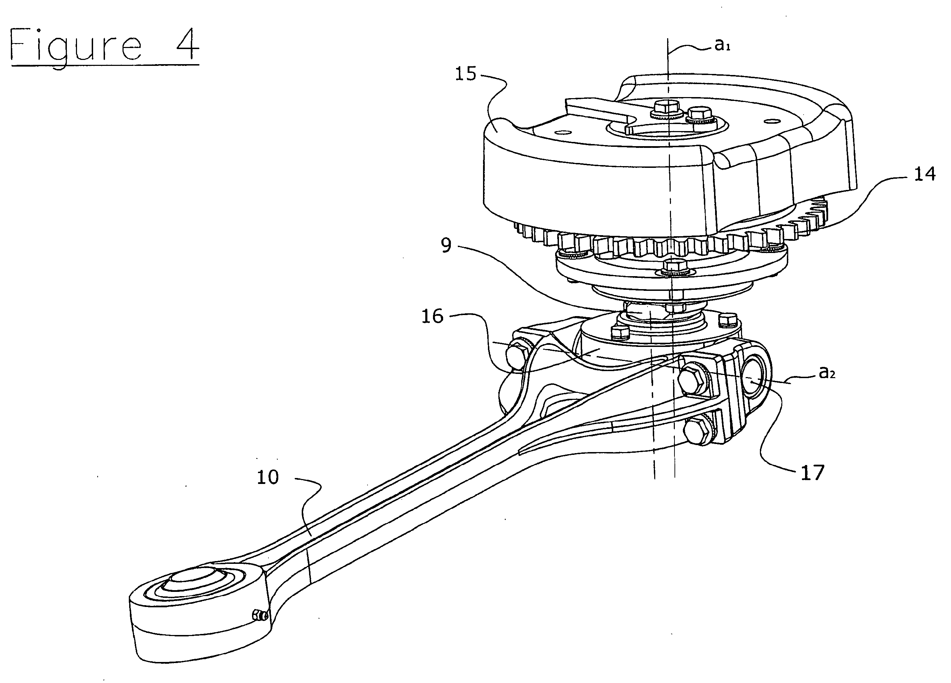

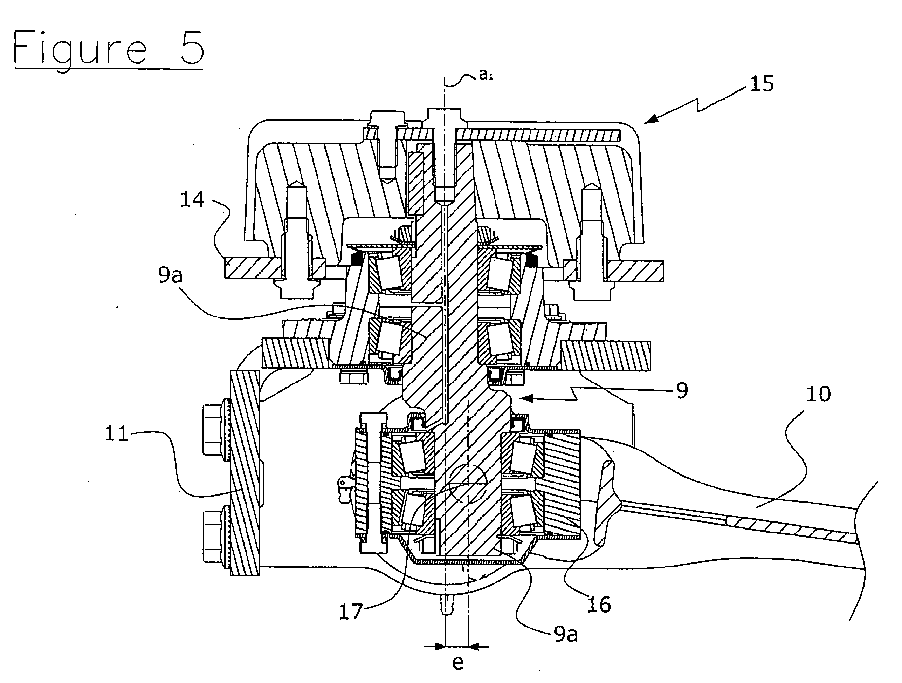

Le fait d'incliner l'ensemble berceau support 11-dispositif à excentrique 9 suivant l'angle a entraine une inclinaison B-B' ayant pour valeur deux fois celle de l'excentrique e, c'est-à-dire 2e, comme illustré sur les figures 4 à 7.

Si l'angle α mesuré entre les plans Y₀ et X₀ est voisin de 90°, la longueur du segment B-B', c'est-à-dire 2e, est sensiblement égale au segment D-D', lui-même égal à la valeur de déplacement d de la liaison de la biellette 10 sur l'arbre de secouage 6.

Le segment D-D', ne pouvant être supérieur au segment B-B', on se trouve donc en position de réglage d'amplitude maximum des secoueurs 5, comme illustré sur la figure 11.

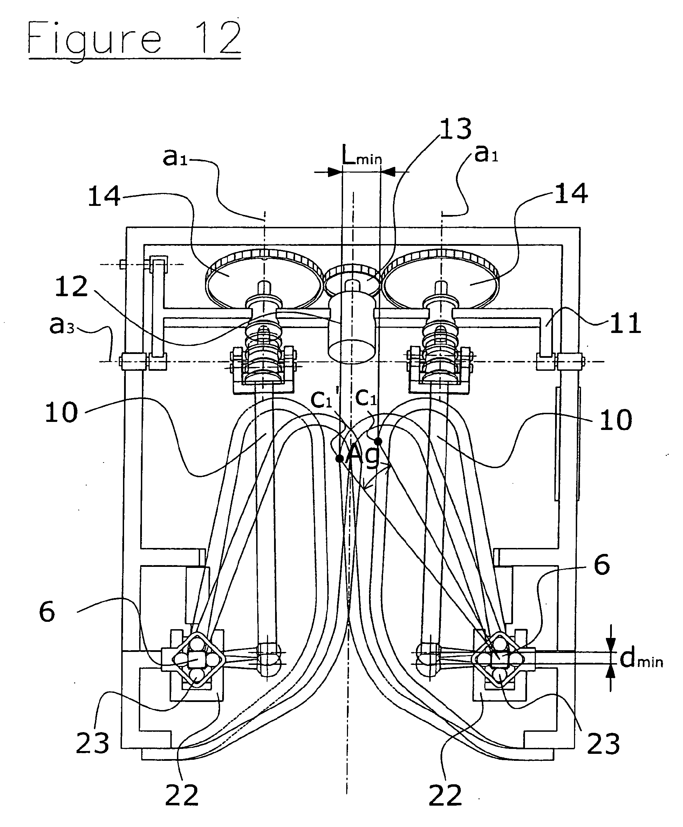

Si l'angle α est minimum, la longueur du segment B-B', c'est-à-dire 2e, ne change pas, car c'est une constante. Par contre la longueur du segment D-D' diminue, ce qui entraine donc une diminution du déplacement d de la liaison de la biellette 10 sur l'arbre 6, et, par conséquent, entraine une diminution de l'angle d'animation Ag de l'amplitude du mouvement de l'arbre de secouage 6 et des secoueurs 5 au point de référence arbitraire C1 d'un secoueur 5, comme illustré sur la figure 12.

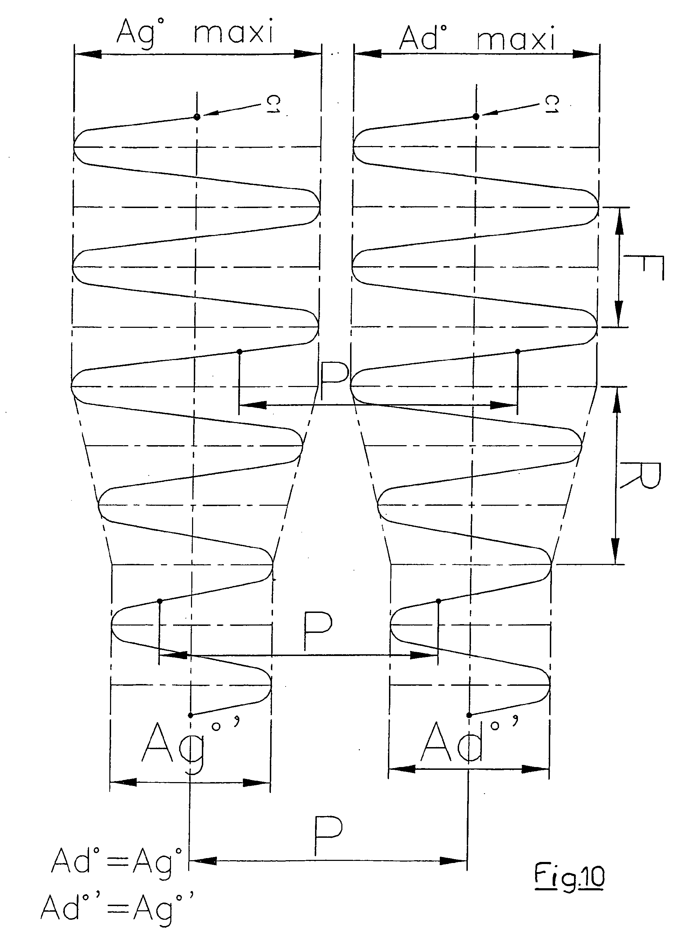

La figure 10 représente la trajectoire théorique du point de référence arbitraire C1 des secoueurs gauche et droit 5 lors d'une opération de réglage de diminution de l'amplitude du mouvement de l'arbre de secouage 6 et des secoueurs 5 durant l'animation en rotation des deux systèmes à excentrique gauche et droit.

La première partie (partie haute de la courbe) représente la trajectoire des points C1 en amplitude maximum selon une fréquence de rotation F des excentriques gauche et droit synchronisés. La distance entre les deux points de référence C1 des secoueurs gauche et droit 5 est ce que l'on nomme le réglage du pincement P.

Pendant le temps R de diminution de l'amplitude à l'aide de l'actionneur 20 on constate que la valeur du pincement P ne varie pas, ce qui est très important afin d'avoir une indépendance des réglages entre le réglage de ladite amplitude matérialisée par l'angle d'animation Ag des arbres de secouage gauche et droit 6 et le réglage dudit pincement matérialisé par la distance mesurée entre les points de référence arbitraires C1 des secoueurs 5 gauche et droit.

Selon une autre disposition caractéristique de l'invention, les arbres de secouage 6 des ensembles de secouage 4A, 4B sont montés avec une aptitude de mouvement oscillatoire, de l'ordre de 10° à 12°, autour de leur axe longitudinal a4 et de basculement d'amplitude limitée autour d'un point situé dans leur partie basse.

Pour obtenir ce mouvement oscillant-basculant, la partie haute de chaque arbre de secouage 6 est montée dans un palier. à rotule 21 logé avec une aptitude de mouvement rectiligne avant-arrière dans une glissière 22 rigidement solidaire du bâti 7 du système de secouage de la machine.

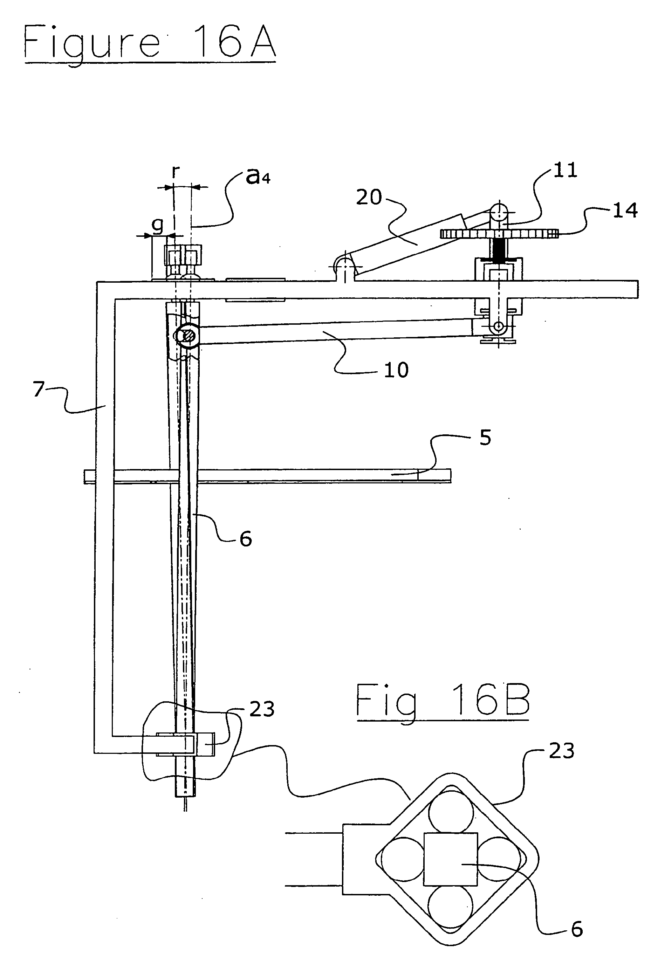

D'autre part, la partie basse de chaque arbre de secouage 6 est montée à travers un palier à rotule ou un palier élastique 23 (figure 16A, 16B) qui peut être constitué par un pivot du type connu sous le nom de « Rosta » ® monté dans la partie inférieure du bâti 7.

Ce palier élastique assure une liaison oscillante de l'arbre de secouage 6 tout en lui permettant un certain degré de liberté tel qu'un léger basculement avant ou arrière r dans l'axe de déplacement du palier à rotule supérieur 21 induit par la glissière 22, comme illustré sur la figure 16A.

Ce mouvement particulier, d'une valeur d'angle basculant très petite, par exemple de l'ordre de 0.5° à 1°, permet de faire pivoter l'arbre de secouage selon son axe d'animation a4, afin d'effectuer tous les réglages de pincement P, de contrôle d'effort, d'évitement des gros piquets et d'ouverture aux piquets fragiles, et ce quelle que soit la position de la biellette 10 en fonction de la position angulaire de l'axe de rotation du système à excentrique 9.

On comprend que les arbres de secouage 6 peuvent être animés d'un mouvement combiné oscillant basculant constitué d'une rotation autour d'un axe principal a4 et d'un basculement avant ou arrière d'amplitude limité orienté dans l'axe de la glissière 22, autour d'un point situé dans leur partie basse et matérialisé par le palier 23.

Le positionnement de chaque palier à rotule 21 droit ou gauche est assuré par un vérin 24 droit ou gauche de contrôle d'effort relié audit palier mobile.

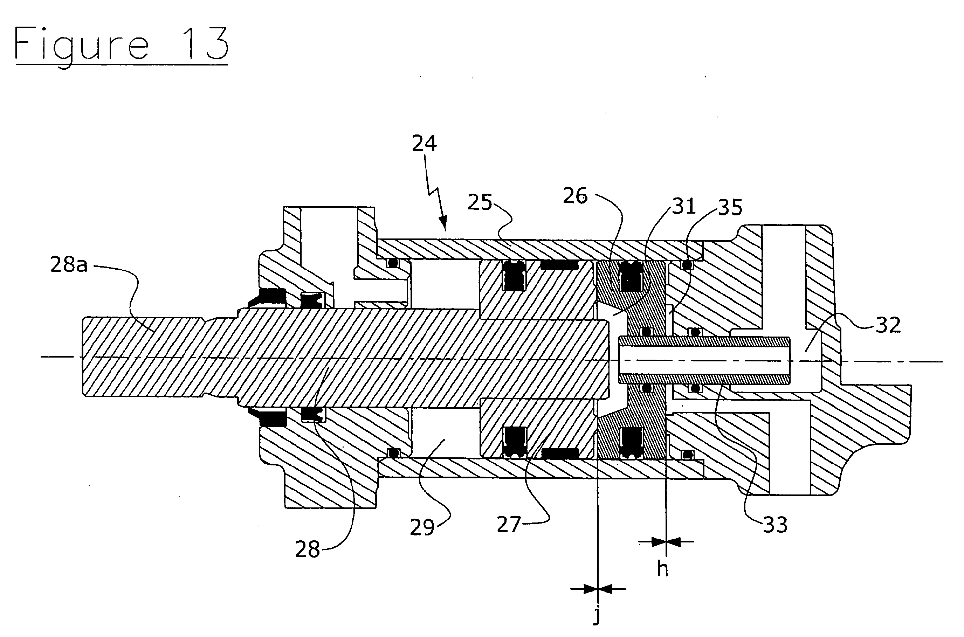

On a représenté aux figures 13 à 15 un exemple de réalisation avantageuse de ces vérins 24.

Ils comprennent un corps cylindrique 25 dans lequel sont logés, avec une aptitude de déplacement axial, deux pistons 26 et 27.

Le piston 27 est rigidement solidaire d'une tige 28 dont l'extrémité 28a émergeant du corps cylindrique 25 est fixée au palier à rotule mobile 21 dans lequel est montée l'extrémité supérieure des arbres d'actionnement 6.

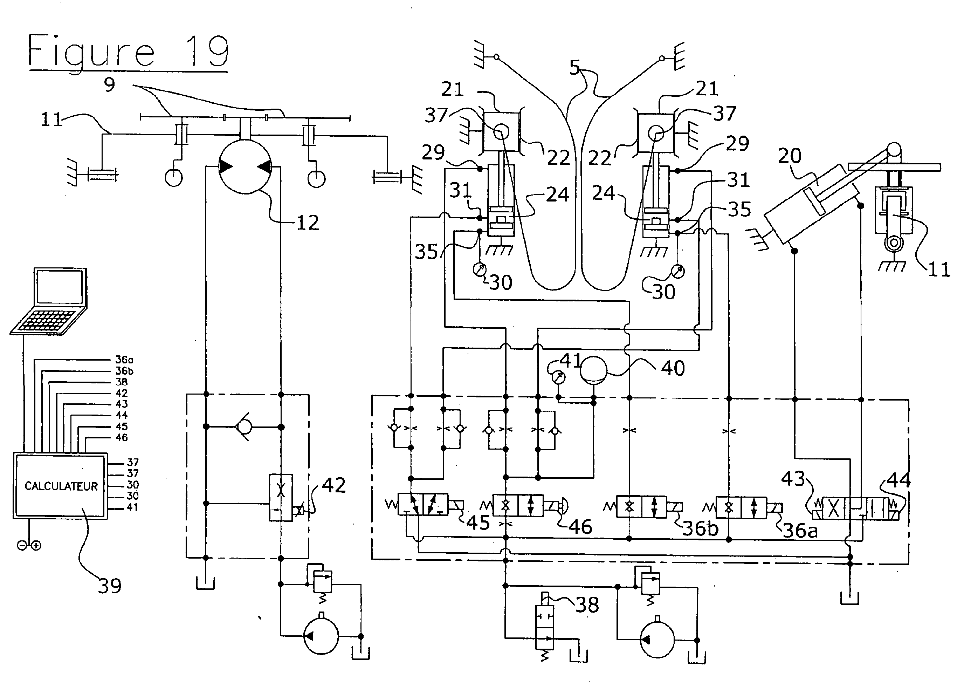

Le piston 27, appelé ci-après piston tige 27-28, délimite une première chambre 29 reliée à un capteur de pression 30 (figure 19). Il délimite également, avec le piston 26, ci-après dénommé piston de pincement, une deuxième chambre 31 communiquant, à travers une tige axiale creuse 33 traversant de part en part ledit piston de pincement 26, avec une conduite 32 ménagée dans le corps 25 du vérin 24.

Cette conduite 32 communique avec une arrivée d'huile hydraulique sous pression contrôlée par un électro-distributeur 45.

Le piston de pincement 26 délimite également, par sa face opposée, une troisième chambre 35 communiquant, d'une part, avec une arrivée d'huile sous pression contrôlée par un électro-distributeur 36a (coté droit) et par un électro-distributeur 36b (coté gauche) et, d'autre part, avec le capteur de pression 30.

Un exemple de constitution du circuit électro-hydraulique assurant le fonctionnement des vérins de contrôle d'effort 24 droit et gauche, est illustré schématiquement sur la figure 19.

Sur cette figure :
- la référence 42 représente un électro-distributeur proportionnel trois voies dont la fonction est de réguler le débit hydraulique d'alimentation du moteur 12 entraînant en rotation les deux excentriques 9 gauche et droit, afin d'assurer la régulation de la fréquence de secouage ;
- la référence 43-44 représente un électro-distributeur double effet permettant d'actionner le vérin 20 servant à régler l'inclinaison du berceau 11 et, par conséquent, l'amplitude du mouvement de secouage.

Selon une importante caractéristique de l'invention, les vérins 24 constituent des vérins à contrôle d'effort tri-fonctions, à savoir :
a) une fonction de réglage du pincement P entre les secoueurs 5 droit et gauche ;
b) une fonction de contrôle d'effort du palier à rotule 21 ;
c) une fonction d'ouverture rapide des secoueurs 5.

### 1 - Fonction de réglage du pincement entre les secoueurs 5 droit et gauche, matérialisé par la distance P mesurée entre les points arbitraires C1 desdits secoueurs.

Cette fonction est assurée par l'alimentation en volume d'huile de la première chambre 35 des vérins 24 droit ou gauche.

Le principe est simple, il suffit de déplacer le palier à rotule 21 dans sa glissière 22, par exemple vers l'avant de la machine et dans l'axe de ladite glissière pour générer un basculement de l'arbre de secouage 6, autour de sa fixation en partie basse (palier 23), pour une même position de la biellette 10.

Ce basculement est mesuré par des capteurs angulaires potentiométriques 37 coté droit et coté gauche, par exemple installés à l'extrémité supérieure des arbres d'actionnement 6. Pour ce faire, il suffit de piloter simultanément les électro-distributeurs 36a droit et 36b gauche du circuit hydraulique de commande et également un troisième électro-distributeur 38 dudit circuit, simultanément, afin d'obtenir le déplacement du piston 26, lui-même en appui sur le piston tige 27 maintenant le palier à rotule 21 dans la glissière 22. Ce déplacement est mesuré par les capteurs potentiométriques 37 pour les cotés droit et gauche, afin d'assurer une boucle fermée d'asservissement de réglage de position entre les électro-distributeurs 36a, 36b, 38, et lesdits capteurs potentiométriques 37.

Pour augmenter la valeur de pincement entre les secoueurs 5, il suffit de piloter les électro-distributeurs 36, 38 simultanément ; par contre, pour réduire la valeur de pincement P entre les secoueurs 5, il suffit de piloter les électro-distributeurs droit et gauche 36 seulement, afin que la chambre 32 des vérins 24 droit et gauche se dégonfle sous l'action de la pression statique du contrôle d'effort effectif dans la chambre 29 desdits vérins 24 droit et gauche.

### Il - Fonction contrôle d'effort du palier à rotule 21 de fixation haute des deux arbres de secouage 6 gauche et droit.

Cette fonction a pour but d'assurer le maintien statique des paliers à rotule gauche et droit 21 dans l'axe des glissières 22 et en appui sur le piston interne de réglage de pincement 26 des vérins 24 droit et gauche, jusqu'à un certain effort mesuré par les capteurs de pression 30, mesurant une pression résultante des efforts dûs à la contre-réaction d'inertie mécanique de l'arbre de secouage 6 de l'ensemble de secoueurs 4A ou 4B et de l'appui des secoueurs 5 sur la végétation, les souches de vigne ou les piquets de palissage.

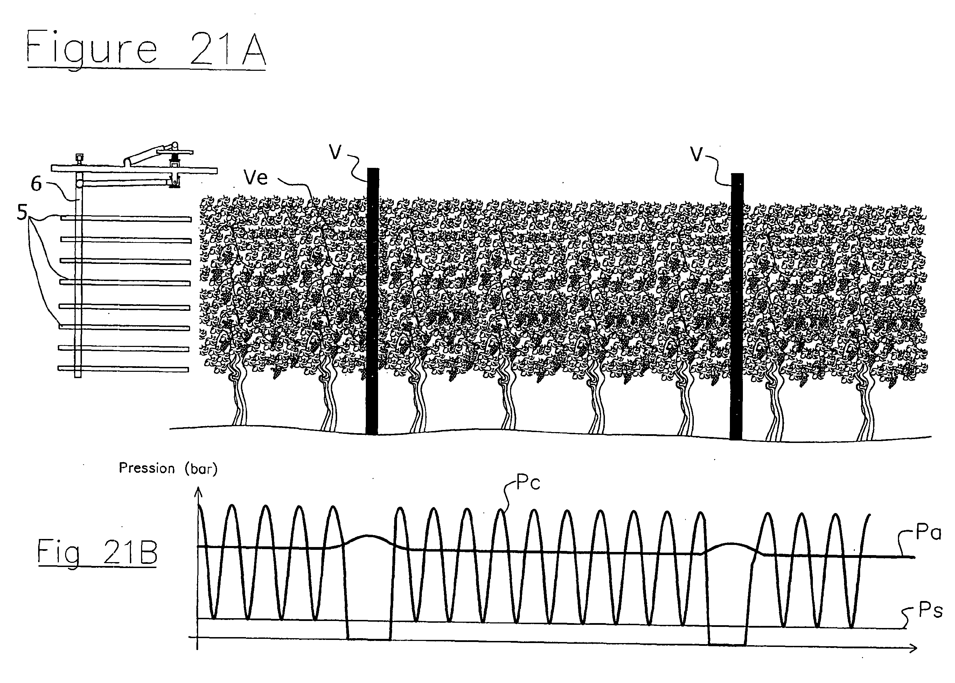

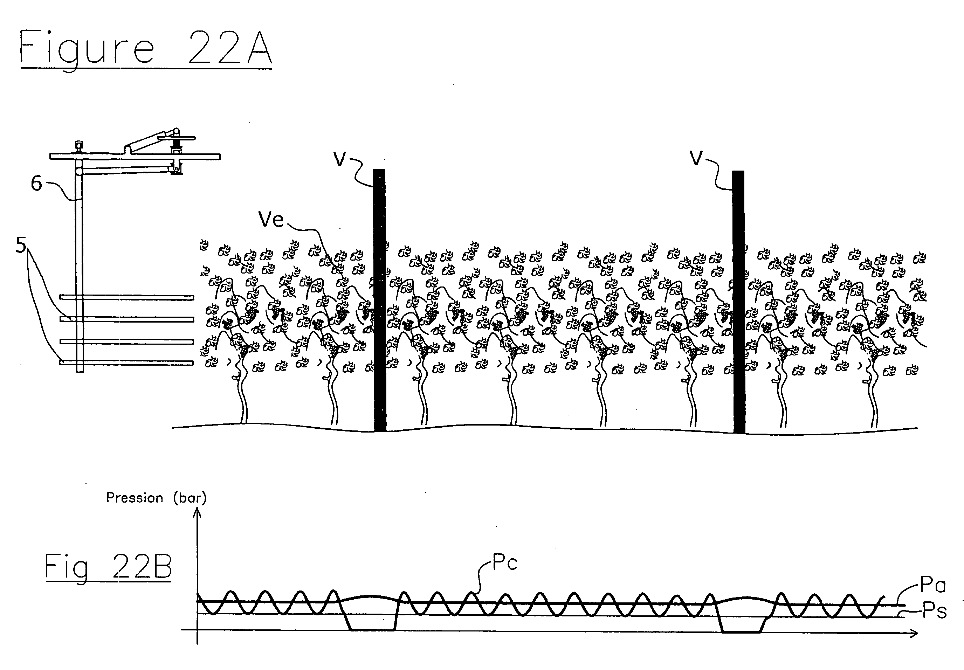

Pour effectuer le réglage automatique et auto-adaptatif du contrôle d'effort, il suffit de gonfler la chambre 29 des vérins de contrôle d'effort 24 droit et gauche à une certaine pression Pa définie de la manière décrite ci-après (voir figures 21A, 21B et 22A, 22B).

On mesure, en permanence, par exemple cent fois par seconde, la pression résultante Pc dans la chambre de réglage du pincement 35 des vérins 24 droit et gauche, afin de faire en sorte que le minimum de pression mesuré moyen ne soit pas en-dessous de la pression de seuil programmée Ps, par exemple 7 bars.

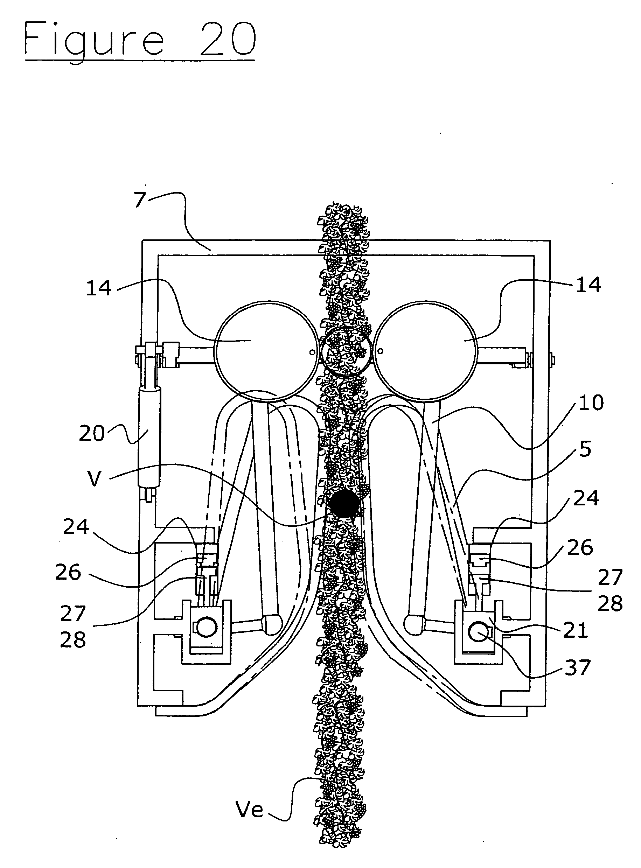

Cette pression de seuil « mini » peut être franchie seulement dans le cas où l'ensemble des secoueurs 5 entrent en collision avec un gros piquet de vigne V, comme illustré sur la figure 20, et ce, afin de préserver les systèmes à excentrique de la commande de secouage et de transmettre seulement les efforts nécessaires au secouage de la végétation Ve.

Comme illustré sur les figures 21A, 21B et 22A, 22B, le système est auto-adaptatif. En effet, la mesure de pression dans la chambre 29 des vérins 24 droit et gauche est directement proportionnelle au nombre de secoueurs 5 montés sur les arbres de secouage 6 et à la vigueur de la végétation Ve qu'il faut secouer.

Sur les figures 21A et 21B, on peut voir que le signal de pression Pc est plus important que sur les figures 22A et 22B, et ce, pour les seules raisons que l'on peut travailler avec un nombre plus ou moins important de secoueurs 5, avec des végétations plus ou moins vigoureuses, avec des fréquences de secouage plus ou moins élevées et avec des amplitudes plus ou moins importantes, ce qui entraine un nombre de cas de figures infini et qui nécessite donc un système intelligent et auto-adaptatif.

Un calculateur 39 est relié aux capteurs de pression 30 droit et gauche et en fonction des mesures de pression expliquées ci-dessus, décide de gonfler ou de dégonfler la pression hydraulique Pa du contrôle d'effort dans la chambre 29 en pilotant les électro-distributeurs 46, 38 et en gonflant un accumulateur oléo-élastique 40 de référence à une pression élastique Pa et mesuré par un capteur de pression dédié 41.

Pour réduire la pression Pa, il suffit de piloter l'un des électro-distributeurs 36, seul, afin de dégonfler la pression Pa de l'accumulateur 40.

La figure 13 représente le vérin contrôle d'effort 24 en position mini de réglage du pincement P des secoueurs 5. La cote h est égale à zéro.

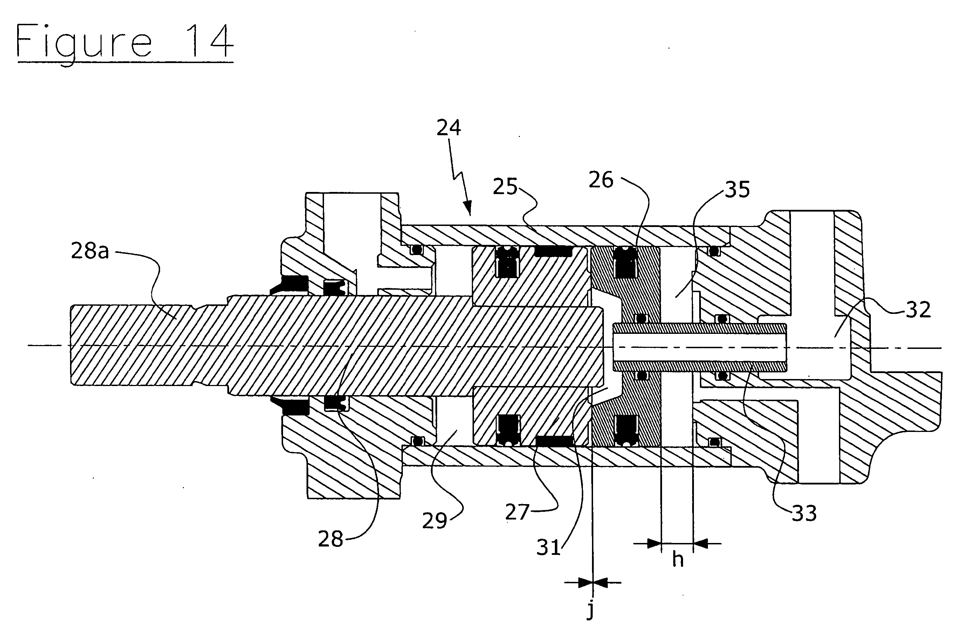

La figure 14 représente le vérin contrôle d'effort 24 en position intermédiaire de réglage du pincement P. Le piston 26 est décollé du fond de la chambre 32, à une distance h dudit fond supérieure à zéro.

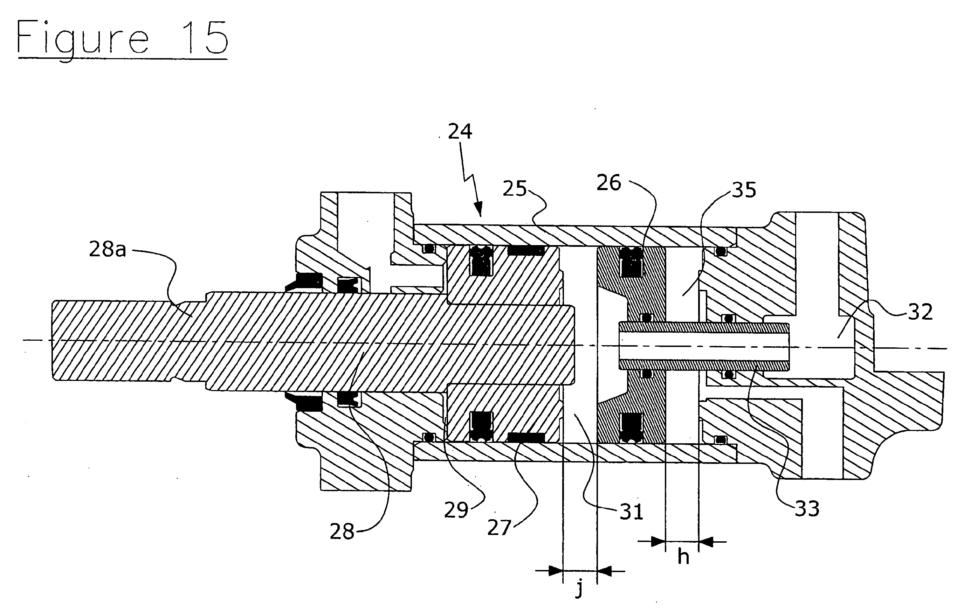

La figure 15 représente le vérin contrôle d'effort 24 avec le piston 26 dans la même position mais avec le piston de maintien du contrôle d'effort 27 décollé du piston 26 de réglage du pincement dans le cas, par exemple, où l'ensemble des secoueurs 5 rencontre un gros piquet de vigne V.

Aussitôt le piquet sorti de la zone active des secoueurs 5, le piston tige contrôle d'effort 27 reprend sa place initiale en contact avec le piston 26 de réglage du pincement P des secoueurs 5. La précision de réglage du pincement entre les secoueurs 5 reste intacte et inchangée.

### III - Fonction d'ouverture rapide des secoueurs_{.}

Par exemple, lors du passage d'un piquet de vigne fragile dans le système de secouage 4A-4B, il est possible de piloter l'ouverture des vérins contrôle d'effort 24 droit et gauche en alimentant volontairement la chambre 32 desdits vérins en volume d'huile hydraulique, afin d'ouvrir la cote de pincement P entre les secoueurs 5 dans le but de préserver le piquet fragile d'un contact trop violent avec lesdits secoueurs. L'ordre d'ouverture vient du calculateur 39 et d'une information transmise à ce dernier par des détecteurs de piquets 47 reliés audit calculateur et montés sur l'extrémité avant ou à proximité de l'extrémité avant de la branche active 5a d'au moins un des secoueurs de chaque ensemble de secouage 4A et 4B, de préférence sur le secoueur supérieur 5' de chaque ensemble. Ce détecteur de piquets peut être constitué par un capteur de chocs connu en soi, tel que par exemple, un accéléromètre. L'extrémité avant de la branche active du secoueur étant fixée à l'arbre 8 par l'intermédiaire de dispositifs connus sous le nom de « silentblocs » ® 48 (figure 2).

Pour effectuer ces mouvements des vérins 24 droit et gauche, il suffit de piloter les électro-distributeurs 45 droit ou gauche et 38, via le calculateur 39, afin d'alimenter la chambre 31 desdits vérins très rapidement en volume d'huile hydraulique et pendant le temps du passage du piquet fragile dans le système de secouage. Le piston tige 27-28 se déplace rapidement afin d'effectuer l'ouverture des secoueurs 5. Une fois le piquet fragile sorti de la zone active des secoueurs 5, il suffit de relâcher l'activation des électro-distributeurs 36, 38 afin, de dégonfler la chambre de contrôle 32, jusqu'à ce que le piston tige 27-28 reprenne sa place initiale, c'est-à-dire en contact avec le piston 26, en position de réglage du pincement fixé avant la manoeuvre d'ouverture au piquet.

L'invention concerne aussi un procédé de commande de secouage mécatronique des machines de récolte de baies, en particulier des machines à vendanger, du genre comprenant un système de secouage 4A-4B constitué de deux ensembles de détachement des baies 4A, 4B montés en vis-à-vis et comportant, chacun, une pluralité de secoueurs superposés 5, par exemple constitués par des barreaux flexibles, fixés, par l'intermédiaire de leurs extrémités, à deux arbres verticaux 6, 8 dont l'un (6) au moins est un arbre d'actionnement oscillant assujetti à une commande de secouage mécatronique permettant de lui communiquer un mouvement oscillatoire, caractérisé en ce que cette commande de secouage mécatronique est réalisée au moyen d'un système à excentrique 9 relié audit arbre d'actionnement 6 par l'intermédiaire d'une biellette 10, et en ce que l'on règle l'amplitude du mouvement oscillatoire dudit arbre d'actionnement 6 en modifiant l'orientation de l'axe de rotation a1 dudit système à excentrique 9 dans un plan PI parallèle au plan médian PL de la machine et, de la sorte, l'amplitude du mouvement de secouage de l'ensemble des secoueurs 5.

Selon un mode d'exécution préféré, on réalise l'animation des arbres d'actionnement oscillants 6 au moyen de deux systèmes à excentrique 9 montés sur un support basculant ou berceau 11 et en ce qu'on actionne ces deux systèmes à excentrique 9 en rotation, simultanément et en synchronisme, au moyen d'un actionneur commun 12, de préférence constitué par un moteur hydraulique, installé sur ledit berceau 11, et d'un moyen mécanique de transmission à entraînement positif 13, 14, également monté sur ledit berceau dont le pivotement est réalisé par un actionneur 20 et permet d'obtenir, simultanément et en synchronisme, une orientation identique des axes de rotation a1 des excentriques et, de la sorte, de régler l'amplitude du mouvement de secouage de l'ensemble des secoueurs 5 du système de secouage 4A-4B.

## Revendications

1. Machine de récolte de baies, en particulier machine à vendanger du genre comprenant un système de secouage constitué de deux ensembles de détachement des baies (4A, 4B) montés en vis-à-vis et comportant, chacun, une pluralité de secoueurs superposés (5), par exemple constitués par des barreaux flexibles, fixés, par l'intermédiaire de leurs extrémités, à deux arbres verticaux (6, 8) dont l'un (6) au moins est un arbre d'actionnement oscillant assujetti à une commande de secouage mécatronique permettant de lui communiquer un mouvement oscillatoire, **caractérisée en ce que** cette commande de secouage mécatronique comprend un système à excentrique (9) relié audit arbre d'actionnement (6) par l'intermédiaire d'une biellette (10), et **en ce que** l'axe de rotation (a1) de cet excentrique (9) est monté avec une orientation réglable dans un plan (PI) parallèle au plan médian (PL) de la machine, de sorte que la modification de cette orientation permet de modifier l'amplitude du mouvement d'oscillation de l'arbre d'actionnement (6), et, par voie de conséquence, l'amplitude du mouvement de secouage des secoueurs (5) fixés audit arbre d'actionnement (6).

2. Machine de récolte de baies, en particulier machine à vendanger, selon la revendication 1, **caractérisée en ce que** le système de commande de secouage mécatronique comprend deux excentriques (9) montés cote à cote sur un support basculant ou berceau (11), ces deux systèmes à excentrique (9) étant actionnés en rotation, simultanément et en synchronisme, par un actionneur commun (12), de préférence constitué par un moteur hydraulique, supporté par ledit berceau (11), et par un moyen mécanique de transmission à entraînement positif (13, 14) également supporté par ledit berceau dont le pivotement est réalisé par un actionneur (20) et permet d'obtenir simultanément et en synchronisme une orientation identique des axes de rotation (a1) des systèmes à excentrique (9) et, de la sorte, de régler l'amplitude du mouvement de secouage de l'ensemble des secoueurs (5) du système de secouage (4A-4B).

3. Machine de récolte de baies, en particulier machine à vendanger, selon la revendication 2, **caractérisée en ce que** le moyen mécanique de transmission à entraînement positif est constitué par une liaison commune par engrenage comprenant une roue dentée (13) entraînée par l'actionneur commun (12) et engrenant avec une roue dentée (14) calée sur l'arbre de rotation (9a) de chaque système à excentrique (9).

4. Machine de récolte de baies, en particulier machine à vendanger, selon l'une quelconque des revendications 1 à 3, **caractérisée en ce que** le système à excentrique (9), ou chaque système à excentrique (9), est solidaire d'un volant d'inertie (15).

5. Machine de récolte de baies, en particulier machine à vendanger, selon l'une quelconque des revendications 1 à 4, **caractérisée en ce que** la biellette (10) est fixée au système à excentrique (9) par l'intermédiaire d'un boîtier à roulement (16) assurant la fonction de pivot et de deux tenons (17) diamétralement opposés et solidaires dudit boîtier à roulement, l'axe (a2) de ces tenons étant perpendiculaire à l'axe de rotation (a1) de l'excentrique (9).

6. Machine de récolte de baies, en particulier machine à vendanger, selon l'une quelconque des revendications 2 à 5, **caractérisée en ce que** le berceau (11) supportant les organes de la commande à excentrique double est monté avec une aptitude de basculement autour d'un axe (a3) perpendiculaire et concourant aux axes (a1) de rotation des ensembles à excentrique (9) gauche et droit.

7. Machine de récolte de baies, en particulier machine à vendanger, selon la revendication 6, **caractérisée en ce que** le berceau basculant (11) est muni, à ses extrémités droite et gauche, de pivots (18) montés avec une aptitude de rotation dans des paliers (19) fixés latéralement sur le bâti (7) du système de secouage, un actionneur (20) reliant un élément supérieur (7a) du bâti (7) et un bras (11 a) solidaire du berceau, assurant le pivotement de celui-ci.

8. Machine de récolte de baies, en particulier machine à vendanger, selon l'une quelconque des revendications 1 à 7, **caractérisée en ce que** les arbres de secouage (6) des ensembles de secouage (4A, 4B) sont montés avec une aptitude de mouvement oscillatoire autour de leur axe longitudinal (a4) et de basculement d'amplitude limitée autour d'un point (23) situé dans leur partie basse.

9. Machine de récolte de baies, en particulier machine à vendanger, selon la revendication 8, **caractérisée en ce que** la partie haute de chaque arbre de secouage oscillant-basculant (6) est montée dans un palier à rotule (21) logé dans une glissière (22) rigidement solidaire du bâti (7) du système de secouage de la machine.

10. Machine de récolte de baies, en particulier machine à vendanger, selon l'une des revendications 8 ou 9, **caractérisée en ce que** la partie basse de chaque arbre de secouage oscillant-basculant (6) est montée à travers un palier élastique (23) ou à travers un palier à rotule.

11. Machine de récolte de baies, en particulier machine à vendanger, selon l'une des revendications 9 ou 10, **caractérisée en ce que** le palier à rotule mobile supérieur (21) de chaque arbre d'actionnement (6) est relié à un vérin de contrôle d'effort (24).

12. Machine de récolte de baies, en particulier machine à vendanger, selon la revendication 11, **caractérisée en ce que** le vérin de contrôle d'effort (24) est agencé pour remplir trois fonctions :
- une fonction de contrôle d'effort du palier à rotule mobile (21) de fixation haute de chaque arbre de secouage (6) droit ou gauche ;
- une fonction de réglage du pincement (P) entre les ensembles de secouage (4A, 4B) droit et gauche ;
- une fonction d'ouverture rapide du système de secouage.

13. Machine de récolte de baies, en particulier machine à vendanger, selon la revendication 12, **caractérisée en ce que** chaque vérin de contrôle d'effort tri-fonctions (24) comprend un corps cylindrique (25) dans lequel sont logés avec une aptitude de déplacement axial deux pistons (26 et 27), l'un (27) de ces pistons est rigidement solidaire d'une tige (28) dont l'extrémité (28a) émergeant du corps cylindrique (25) est fixée au palier à rotule mobile (21), et délimite une première chambre (29) reliée à un capteur de pression (30), ledit piston tige (27-28) délimitant également avec le piston de pincement (26) une deuxième chambre (31) communiquant avec une conduite d'alimentation et de refoulement (32) du circuit hydraulique, par exemple à travers une tige axiale creuse (33) traversant de part en part ledit piston de pincement (26), cette conduite communiquant, d'autre part, avec une arrivée d'huile hydraulique sous pression contrôlée par un électro-distributeur (45) ; ledit piston (26) délimitant également par sa face opposée une troisième chambre (35) communiquant, d'une part, avec une arrivée d'huile sous pression contrôlée par un électro-distributeur (36a) coté droit et par un électro-distributeur (36b) coté gauche, et, d'autre part, avec ledit capteur de pression (30).

14. Machine de récolte de baies, en particulier machine à vendanger, selon la revendication 13, **caractérisée en ce que** les déplacements du piston de pincement (26) sont mesurés par des capteurs potentiométriques (37 droit et gauche) installés à l'extrémité supérieure des arbres d'actionnement (6), afin d'assurer une boucle fermée d'asservissement de réglage de position entre lesdits électro-distributeurs et lesdits capteurs potentiométriques.

15. Machine de récolte de baies, en particulier machine à vendanger, selon l'une quelconque des revendications 12 à 14, **caractérisée en ce que** des détecteurs de piquets (47) reliés à un calculateur (39) commandant la fonction d'ouverture rapide du système de secouage (4A-4B) des vérins de contrôle d'effort (24), sont montés sur l'extrémité avant ou à proximité de l'extrémité avant de la branche active (5a) d'au moins l'un des secoueurs 5 de chaque ensemble de secouage (4A et 4B).

16. Machine de récolte de baies, en particulier machine à vendanger, selon la revendication 15, **caractérisée en ce que** le détecteur de piquet (47) est monté sur le secoueur supérieur (5') de chaque ensemble de secouage (4A, 4B).

17. Machine de récolte de baies, en particulier machine à vendanger, selon l'une des revendications 15 ou 16, **caractérisée en ce que** les détecteurs de piquets (47) sont constitués par des capteurs de chocs connus en soi, par exemple par des accéléromètres, l'extrémité avant de la branche active (5a) des secoueurs munis d'un détecteur de piquet (47) étant reliée aux arbres fixes (8) des ensembles de secouage (4A, 4B) par l'intermédiaire de dispositifs
silentblocs (48).

18. Procédé de commande de secouage mécatronique des machines de récolte de baies, en particulier des machines à vendanger, du genre comprenant un système de secouage (4A-4B) constitué de deux ensembles de détachement des baies (4A, 4B) montés en vis-à-vis et comportant, chacun, une pluralité de secoueurs superposés (5), par exemple constitués par des barreaux flexibles, fixés, par l'intermédiaire de leurs extrémités, à deux arbres verticaux (6, 8) dont l'un (6) au moins est un arbre d'actionnement oscillant assujetti à une commande de secouage mécatronique permettant de lui communiquer un mouvement oscillatoire, **caractérisé en ce que** cette commande de secouage mécatronique est réalisée au moyen d'un système à excentrique (9) relié audit arbre d'actionnement (6) par l'intermédiaire d'une biellette (10), et **en ce que** l'on règle l'amplitude du mouvement oscillatoire dudit arbre d'actionnement (6) en modifiant l'orientation de l'axe de rotation (a1) dudit système à excentrique (9), dans un plan (PI) parallèle au plan médian (PL) de la machine et, de la sorte, l'amplitude du mouvement de secouage de l'ensemble des secoueurs (5).

19. Procédé selon la revendication 18, **caractérisé en ce que** l'on réalise l'animation des arbres d'actionnement oscillants (6) au moyen de deux systèmes à excentrique (9) montés sur un support basculant ou berceau (11) et **en ce que** l'on actionne ces deux systèmes à excentrique (9) en rotation, simultanément et en synchronisme, au moyen d'un actionneur commun (12), par exemple constitué par un moteur hydraulique, installé sur ledit berceau (11), et d'un moyen mécanique de transmission à entrainement positif (13, 14) également monté sur ledit berceau dont le pivotement est réalisé par un actionneur (20) et permet d'obtenir, simultanément et en synchronisme, une orientation identique des axes de rotation (a1) des systèmes à excentrique et, de la sorte, de régler l'amplitude du mouvement de secouage de l'ensemble des secoueurs (5) du système de secouage (4A-4B).

## Claims

1. A berry harvesting machine, in particular a grape harvesting machine, of the kind comprising a shaking system formed by two berry detachment assemblies (4A, 4B) mounted in mutually facing relationship and each comprising a plurality of superposed shakers (5), for example formed by flexible bars fixed by way of their ends to two vertical shafts (6, 8) of which one (6) at least is an oscillating actuating shaft subjected to a mechatronic shaking control for communicating thereto an oscillatory movement, **characterised in that** said mechatronic shaking control comprises an eccentric system (9) connected to said actuating shaft (6) by way of a connecting rod (10), and that the axis of rotation (a1) of said eccentric (9) is mounted with an orientation that is adjustable in a plane (PI) parallel to the median plane (PL) so that the modification in said orientation makes it possible to modify the amplitude of the oscillatory movement of the actuating shaft (6) and consequently the amplitude of the shaking movement of the shakers (5) which are fixed to the actuating shaft (6).

2. A berry harvesting machine, in particular a grape harvesting machine, according to claim 1 **characterised in that** the mechatronic shaking control system comprises two eccentrics (9) mounted side-by-side on a swinging support or cradle (11), said two eccentric systems (9) being actuated in rotation simultaneously and in synchronism by a common actuator (12), preferably formed by a hydraulic motor, supported by said cradle (11), and by a mechanical positive-entrainment transmission means (13, 14) which is also supported by said cradle, the pivotal movement of which is effected by an actuator (20) and makes it possible to obtain simultaneously and in synchronism an identical orientation of the axes of rotation (a1) of the eccentric systems (9) and **in that** way to regulate the amplitude of the shaking movement of the assembly of shakers (5) of the shaking system (4A-4B).

3. A berry harvesting machine, in particular a grape harvesting machine, according to claim 2 **characterised in that** the mechanical positive-entrainment transmission means is formed by a common gear engagement link comprising a toothed wheel (13) driven by the common actuator (12) and meshing with a toothed wheel (14) fixed on the rotary shaft (9a) of each eccentric system (9).

4. A berry harvesting machine, in particular a grape harvesting machine, according to any one of claims 1 to 3 **characterised in that** the eccentric system (9) or each eccentric system (9) is fixed with respect to a flywheel (15).

5. A berry harvesting machine, in particular a grape harvesting machine, according to any one of claims 1 to 4 **characterised in that** the connecting rod (10) is fixed to the eccentric system (9) by way of a rolling bearing casing (16) performing a pivot function and two diametrally opposite pins (17) fixed with respect to the rolling bearing casing, the axis (a2) of said pins being perpendicular to the axis of rotation (a1) of the eccentric (9).

6. A berry harvesting machine, in particular a grape harvesting machine, according to any one of claims 2 to 5 **characterised in that** the cradle (11) supporting the double eccentric control members is mounted with a capability of swinging movement about an axis (a3) perpendicular to and concurrent with the axes of rotation (a1) of the left-hand and right-hand eccentric assemblies (9).

7. A berry harvesting machine, in particular a grape harvesting machine, according to claim 6 **characterised in that** the swinging cradle (11) is provided at its left-hand and right-hand ends with pivots (18) mounted rotatably in bearings (19) fixed laterally on the frame (7) of the shaking system, an actuator (20) connecting an upper element (7a) of the frame (7) and an arm (11a) fixed with respect to the cradle, ensuring pivotal movement thereof.

8. A berry harvesting machine, in particular a grape harvesting machine, according to any one of claims 1 to 7 **characterised in that** the shaking shafts (6) of the shaking assemblies (4A, 4B) are mounted with a capability of oscillatory movement about their longitudinal axis (a4) and a swinging movement of limited amplitude about a point (23) in their lower portion.

9. A berry harvesting machine, in particular a grape harvesting machine, according to claim 8 **characterised in that** the upper portion of each oscillating-swinging shaking shaft (6) is mounted in a swivel bearing (21) accommodated in a sliding guide (22) which is fixed rigidly with respect to the frame (7) of the shaking system of the machine.

10. A berry harvesting machine, in particular a grape harvesting machine, according to one of claims 8 and 9 **characterised in that** the lower portion of each oscillating-swivelling shaking shaft (6) is mounted through an elastic bearing or through a swivel bearing.

11. A berry harvesting machine, in particular a grape harvesting machine, according to one of claims 9 and 10 **characterised in that** the upper mobile swivel bearing (21) of each actuating shaft (6) is connected to a force control jack (24).

12. A berry harvesting machine, in particular a grape harvesting machine, according to claim 11 **characterised in that** the force control jack (24) is adapted to perform three functions:
- a function of controlling the force of the upper mobile fixing swivel bearing (21) of each right-hand or left-hand shaking shaft (6);
- a function of regulating the pinch (P) between the right-hand and left-hand shaking assemblies (4A, 4B); and
- a function of rapid opening of the shaking system.

13. A berry harvesting machine, in particular a grape harvesting machine, according to claim 12 **characterised in that** each triple-function force control jack (24) comprises a cylindrical body (25) in which two pistons (26 and 27) are accommodated with a capability of axial displacement, one (27) of said pistons is fixed rigidly with respect to a rod (28) of which the end (28a) that emerges from the cylindrical body (25) is fixed to the mobile swivel bearing (21) and delimits a first chamber (29) connected to a pressure sensor (30), said piston rod (27-28) also delimiting with the pinch piston (26) a second chamber (31) communicating with a feed and discharge conduit (32) of the hydraulic circuit, for example through a hollow axial shaft passing through said pinch piston (26), said conduit communicating on the other hand with a pressurised hydraulic oil intake controlled by an electrically operated distribution valve (45); said piston (26) also delimiting with its opposite face a third chamber (35) communicating on the one hand with a pressurised oil intake controlled by an electrically operated distribution valve (36a) on the right-hand side and by an electrically operated distribution valve (36b) on the left-hand side and on the other hand with said pressure sensor (30).

14. A berry harvesting machine, in particular a grape harvesting machine, according to claim 13 **characterised in that** the displacements of the pinch piston (26) are measured by right-hand and left-hand potentiometric sensors (37) installed at the upper end of the actuating shafts (6) to provide a closed position regulating control loop between said electrically operated distribution valves and said potentiometric sensors.

15. A berry harvesting machine, in particular a grape harvesting machine, according to any one of claims 12 to 14 **characterised in that** post detectors (47) connected to a computer (39) controlling the rapid opening function of the shaking system (4A-4B) of the force control jacks (24) are mounted on the front end or in the proximity of the front end of the active limb (5a) of at least one of the shakers (5) of each shaking assembly (4A and 4B).

16. A berry harvesting machine, in particular a grape harvesting machine, according to claim 15 **characterised in that** the post detector (47) is mounted on the upper shaker (5') of each shaking assembly (4A, 4B).

17. A berry harvesting machine, in particular a grape harvesting machine, according to one of claims 15 and 16 **characterised in that** the post detectors (47) are formed by per se known shock sensors, for example accelerometers, the front end of the active limb (5a) of the shakers which are provided with a post detector (47) being connected to the fixed shafts (8) of the shaking assemblies (4A, 4B) by way of Silentbloc devices (48).

18. A process for controlling mechatronic shaking of berry harvesting machines, in particular grape harvesting machines, of the kind comprising a shaking assembly (4A-4B) formed by two berry detachment assemblies (4A, 4B) mounted in mutually facing relationship and each comprising a plurality of superposed shakers (5), for example formed by flexible bars fixed by way of their ends to two vertical shafts (6, 8) of which one (6) at least is an oscillating actuating shaft subjected to a mechatronic shaking control for communicating thereto an oscillatory movement, **characterised in that** said mechatronic shaking control is implemented by means of an eccentric system (9) connected to said actuating shaft (6) by way of a connecting rod (10) and that the amplitude of the oscillatory movement of said actuating shaft (6) is regulated by modifying the orientation of the axis of rotation (a1) of said eccentric system (9) in a plane (PI) parallel to the median plane (PL) of the machine and **in that** way the amplitude of the shaking movement of the assembly of shakers (5).

19. A process according to claim 18 **characterised in that** activation of the oscillating actuating shafts (6) is effected by means of two eccentric systems (9) mounted on a swinging support or cradle (11) and that said two eccentric systems (9) are actuated in rotation simultaneously and in synchronism by means of a common actuator (12), for example formed by a hydraulic motor, installed on said cradle (11), and a mechanical positive-entrainment transmission means (13, 14) which is also mounted on said cradle, the pivotal movement of which is implemented by an actuator (20) and makes it possible to obtain simultaneously and in synchronism an identical orientation of the axes of rotation (a1) of the eccentric systems and **in that** way to regulate the amplitude of the shaking movement of the assembly of shakers (5) of the shaking system (4A-4B).

## Patentansprüche

1. Beerenerntemaschine, insbesondere Traubenerntemaschine, von der Art, die ein Schüttelsystem enthält, das aus zwei Einheiten zum Ablösen der Beeren (4A, 4B) besteht, die einander gegenüber montiert sind und je eine Vielzahl von übereinander angeordneten Schüttlern (5) aufweisen, die zum Beispiel aus elastischen Stäben bestehen, welche über ihre Enden an zwei senkrechten Wellen (6, 8) befestigt sind, von denen mindestens eine (6) eine schwingende Betätigungswelle ist, die an einer mechatronischen Schüttelsteuerung befestigt ist, welche es ermöglicht, ihr eine Schwingbewegung zu verleihen, **dadurch gekennzeichnet, dass** diese mechatronische Schüttelsteuerung ein Exzenter-System (9) enthält, das mit der Betätigungswelle (6) mittels einer Verbindungsstange (10) verbunden ist, und dass die Drehachse (a1) dieses Exzenters (9) mit einer in einer Ebene (PI) parallel zur Mittelebene (PL) der Maschine einstellbaren Ausrichtung montiert ist, damit die Veränderung dieser Ausrichtung es ermöglicht, die Amplitude der Schwingbewegung der Betätigungswelle (6) und folglich die Amplitude der Schüttelbewegung der an der Betätigungswelle (6) befestigten Schüttler (5) zu verändern.

2. Beerenerntemaschine, insbesondere Traubenerntemaschine nach Anspruch 1, **dadurch gekennzeichnet, dass** das mechatronische Schüttelsteuerungssystem zwei Exzenter (9) enthält, die nebeneinander auf einem schwingenden Träger oder Traggestell (11) montiert sind, wobei diese zwei Exzenter-Systeme (9) gleichzeitig und synchron von einem gemeinsamen Stellantrieb (12), der vorzugsweise aus einem von dem Traggestell (11) getragenen Hydraulikmotor besteht, und von einer mechanischen Übertragungseinrichtung mit Direktantrieb (13, 14) in Drehung versetzt werden, die ebenfalls von dem Traggestell getragen wird, dessen Schwenken von einem Stellantrieb (20) durchgeführt wird und es ermöglicht, gleichzeitig und synchron eine gleiche Ausrichtung der Drehachsen (a1) der Exzenter-Systeme (9) zu erhalten und auf diese Weise die Amplitude der Schüttelbewegung der Gesamtheit der Schüttler (5) des Schüttelsystems (4A-4B) zu regeln.

3. Beerenerntemaschine, insbesondere Traubenerntemaschine nach Anspruch 2, **dadurch gekennzeichnet, dass** die mechanische Übertragungseinrichtung mit Direktantrieb aus einer gemeinsamen Verbindung über ein Zahnradgetriebe besteht, das ein Zahnrad (13) enthält, welches vom gemeinsamen Stellantrieb (12) angetrieben wird und mit einem Zahnrad (14) in Eingriff steht, das auf der Drehwelle (9a) jedes Exzenter-Systems (9) fixiert ist.

4. Beerenerntemaschine, insbesondere Traubenerntemaschine nach einem der Ansprüche 1 bis 3, **dadurch gekennzeichnet, dass** das Exzenter-System (9) oder jedes Exzenter-System (9) fest mit einem Schwungrad (15) verbunden ist.

5. Beerenerntemaschine, insbesondere Traubenerntemaschine nach einem der Ansprüche 1 bis 4, **dadurch gekennzeichnet, dass** die Verbindungsstange (10) am Exzenter-System (9) mittels eines Lagergehäuses (16), das die Funktion eines Drehzapfens gewährleistet, und zwei einander diametral gegenüberliegender und fest mit dem Lagergehäuse verbundener Zapfen (17) befestigt ist, wobei die Achse (a2) dieser Zapfen lotrecht zur Drehachse (a1) des Exzenters (9) ist.

6. Beerenerntemaschine, insbesondere Traubenerntemaschine nach einem der Ansprüche 2 bis 5, **dadurch gekennzeichnet, dass** das die Organe der Steuerung mit doppeltem Exzenter tragende Traggestell (11) mit einer Kippfähigkeit um eine zu den Drehachsen (a1) der linken und der rechten Exzenter-Einheit (9) lotrechte und kreuzende Achse (a3) montiert ist.

7. Beerenerntemaschine, insbesondere Traubenerntemaschine nach Anspruch 6, **dadurch gekennzeichnet, dass** das kippende Traggestell (11) an seinen rechten und linken Enden mit Drehzapfen (18) versehen ist, die drehfähig in Lagern (19) montiert sind, die seitlich am Gestell (7) des Schüttelsystems befestigt sind, wobei ein Stellantrieb (20) ein oberes Element (7a) des Gestells (7) und einen fest mit dem Traggestell verbundenen Arm (11a) verbindet, was dessen Schwenken gewährleistet.

8. Beerenerntemaschine, insbesondere Traubenerntemaschine nach einem der Ansprüche 1 bis 7, **dadurch gekennzeichnet, dass** die Schüttelwellen (6) der Schütteleinheiten (4A, 4B) mit einer Fähigkeit der Schwingbewegung um ihre Längsachse (a4) und des Kippens mit begrenzter Amplitude um einen Punkt (23) montiert sind, der sich in ihrem unteren Bereich befindet.

9. Beerenerntemaschine, insbesondere Traubenerntemaschine nach Anspruch 8, **dadurch gekennzeichnet, dass** der obere Bereich jeder schwingenden-kippenden Schüttelwelle (6) in einem Kugelgelenklager (21) montiert ist, das in einer Gleitschiene (22) untergebracht ist, die starr mit dem Gestell (7) des Schüttelsystems der Maschine verbunden ist.

10. Beerenerntemaschine, insbesondere Traubenerntemaschine nach einem der Ansprüche 8 oder 9, **dadurch gekennzeichnet, dass** der untere Bereich jeder schwingenden-kippenden Schüttelachse (6) über ein elastisches Lager (23) oder über ein Kugelgelenklager montiert ist.

11. Beerenerntemaschine, insbesondere Traubenerntemaschine nach einem der Ansprüche 9 oder 10, **dadurch gekennzeichnet, dass** das obere bewegliche Kugelgelenklager (21) jeder Betätigungswelle (6) mit einem Kraftsteuerungszylinder (24) verbunden ist.

12. Beerenerntemaschine, insbesondere Traubenerntemaschine nach Anspruch 11, **dadurch gekennzeichnet, dass** der Kraftsteuerungszylinder (24) eingerichtet ist, um drei Funktionen zu erfüllen:
- eine Kraftsteuerungsfunktion des beweglichen Kugelgelenklagers (21) zur oberen Befestigung jeder rechten oder linken Schüttelwelle (6);
- eine Einstellfunktion des Klemmabstands (P) zwischen der rechten und der linken Schütteleinheit (4A, 4B);
- eine Funktion des schnellen Öffnens des Schüttelsystems.

13. Beerenerntemaschine, insbesondere Traubenerntemaschine nach Anspruch 12, **dadurch gekennzeichnet, dass** jeder Kraftsteuerungszylinder mit drei Funktionen (24) einen zylindrischen Körper (25) enthält, in dem zwei zur axialen Verschiebung fähige Kolben (26 und 27) untergebracht sind, wobei einer (27) dieser Kolben starr mit einer Stange (28) verbunden ist, deren aus dem zylindrischen Körper (25) vorstehendes Ende (28a) am beweglichen Kugelgelenklager (21) befestigt ist, und eine erste Kammer (29) begrenzt, die mit einem Drucksensor (30) verbunden ist, wobei die Stange/der Kolben (27-28) ebenfalls mit dem Klemmabstand-Kolben (26) eine zweite Kammer (31) begrenzt, die mit einer Versorgungs- und Druckleitung (32) des hydraulischen Kreislaufs, zum Beispiel über eine axiale Hohlstange (33), die den Klemmabstand-Kolben (26) von einer Seite zur anderen durchquert, in Verbindung steht, wobei diese Leitung andererseits mit einer Zufuhr von unter Druck stehendem Hydrauliköl, die von einem Elektroverteiler (45) gesteuert wird, in Verbindung steht; wobei der Kolben (26) ebenfalls durch seine gegenüberliegende Seite eine dritte Kammer (35) begrenzt, die einerseits mit einer von einem rechtsseitigen Elektroverteiler (36a) und von einem linksseitigen Elektroverteiler (36b) gesteuerten Zufuhr von unter Druck stehendem ÖI und andererseits mit dem Drucksensor (30) in Verbindung steht.

14. Beerenerntemaschine, insbesondere Traubenerntemaschine nach Anspruch 13, **dadurch gekennzeichnet, dass** die Verschiebungen des Klemmabstand-Kolbens (26) von Potentiometer-Sensoren (37 rechts und links) gemessen werden, die am oberen Ende der Betätigungswellen (6) eingebaut sind, um einen geschlossenen Regelkreis der Positionseinstellung zwischen den Elektroverteilern und den Potentiometer-Sensoren zu gewährleisten.

15. Beerenerntemaschine, insbesondere Traubenerntemaschine nach einem der Ansprüche 12 bis 14, **dadurch gekennzeichnet, dass** Pfahl-Detektoren (47), die mit einem Rechner (39) verbunden sind, der die Schnellöffnungsfunktion des Schüttelsystems (4A-4B) der Kraftsteuerungszylinder (24) steuert, auf das vordere Ende oder in der Nähe des vorderen Endes des aktiven Zweigs (5a) mindestens eines der Schüttler (5) jeder Schütteleinheit (4A und 4B) montiert sind.

16. Beerenerntemaschine, insbesondere Traubenerntemaschine nach Anspruch 15, **dadurch gekennzeichnet, dass** der Pfahl-Detektor (47) auf den oberen Schüttler (5') jeder Schütteleinheit (4A, 4B) montiert ist.

17. Beerenerntemaschine, insbesondere Traubenerntemaschine nach einem der Ansprüche 15 oder 16, **dadurch gekennzeichnet, dass** die Pfahl-Detektoren (47) aus an sich bekannten Aufprallsensoren bestehen, zum Beispiel aus Beschleunigungsmessern, wobei das vordere Ende des aktiven Zweigs (5a) der mit einem Pfahl-Detektor (47) versehenen Schüttler mit den ortsfesten Wellen (8) der Schütteleinheiten (4A, 48) mittels Silentblock-Vorrichtungen (48) verbunden ist.

18. Verfahren zur mechatronischen Schüttelsteuerung der Beerenerntemaschinen, insbesondere der Traubenerntemaschinen von der Art, die ein Schüttelsystem (4A-4B) enthält, das aus zwei einander gegenüber montierten Einheiten zum Ablösen der Beeren (4A, 4B) besteht, die je eine Vielzahl von übereinander angeordneten Schüttlern (5) aufweisen, die zum Beispiel aus elastischen Stäben bestehen, welche über ihre Enden an zwei senkrechten Wellen (6, 8) befestigt sind, von denen mindestens eine (6) eine schwingende Betätigungswelle ist, die an einer mechatronischen Schüttelsteuerung befestigt ist, die es ermöglicht, ihr eine Schwingbewegung zu verleihen, **dadurch gekennzeichnet, dass** diese mechatronische Schüttelsteuerung mittels eines Exzenter-Systems (9) durchgeführt wird, das mit der Betätigungswelle (6) über eine Verbindungsstange (10) verbunden ist, und dass die Amplitude der Schwingbewegung der Betätigungswelle (6) eingestellt wird, indem die Ausrichtung der Drehachse (a1) des Exzenter-Systems (9) in einer zur Mittelebene (PL) der Maschine parallellen Ebene (PI) und auf diese Weise die Amplitude der Schüttelbewegung der Gesamtheit der Schüttler (5) verändert wird.

19. Verfahren nach Anspruch 18, **dadurch gekennzeichnet, dass** die Aktivierung der schwingenden Betätigungswellen (6) mittels zweier Exzenter-Systeme (9) durchgeführt wird, die auf einen Kippträger oder ein Traggestell (11) montiert sind, und dass diese zwei Exzenter-Systeme (9) gleichzeitig und synchron mittels eines gemeinsamen Stellantriebs (12), der zum Beispiel aus einem auf dem Traggestell (11) installierten Hydraulikmotor besteht, und einer mechanischen Übertragungseinrichtung mit Direktantrieb (13, 14) in Drehung versetzt werden, die ebenfalls auf das Traggestell montiert ist, dessen Schwenken von einem Stellantrieb (20) durchgeführt wird und es ermöglicht, gleichzeitig und synchron eine gleiche Ausrichtung der Drehachsen (a1) der Exzenter-Systeme zu erhalten, und auf diese Weise die Amplitude der Schüttelbewegung der Gesamtheit der Schüttler (5) des Schüttelsystems (4A-4B) einzustellen.
